# EUROPEAN PATENT SPECIFICATION

(11) **EP 1 920 805 B1**
(45) Date of publication and mention of the grant of the patent: **17.03.2021**
(21) Application number: 07017983.3
(22) Date of filing: 13.09.2007
(51) Int. Cl.: A63F 13/31, A63F 13/327, A63F 13/34, A63F 13/45, A63F 13/77

(54) **Game apparatus, game method and game system**
Spielapparat, Spielmethode und Spielsystem
Appareil de jeu, méthode de jeu et système de jeu

(30) Priority: 19.10.2006 JP 2006285379
(43) Date of publication of application: 14.05.2008
(73) Proprietor: Nintendo Co., Ltd., Kyoto 601-8501 (JP)
(72) Inventor: Kuwahara, Masato, Minami-ku Kyoto 601-8501 (JP); Tanaka, Shoya, Minami-ku Kyoto 601-8501 (JP)
(74) Representative: Lang, Johannes

(56) References cited:
- EP-A1- 0 615 363
- EP-A2- 0 485 227
- US-A- 5 618 045
- US-A1- 2002 061 743
- US-A1- 2005 221 897
- US-A1- 2006 111 187
- US-B1- 6 716 103
- DIOT C ET AL: "A distributed Architecture for Multiplayer Interactive Applications on the Internet" IEEE NETWORK, IEEE SERVICE CENTER, NEW YORK, NY, US LNKD- DOI:10.1109/65.777437, 1 July 1999 (1999-07-01), pages 6-15, XP002345089 ISSN: 0890-8044
- Richard C. Waters: "Time Synchronization in Spline" Mitsubishi Electric Research Labs April 1996 (1996-04), XP002603309 Retrieved from the Internet: URL:http://www.merl.com/reports/docs/TR96- 09.pdf [retrieved on 2010-10-04]

## Description

### BACKGROUND OF THE INVENTION

### Field of the Invention

The present invention relates to a game apparatus, a game method and a game system, and more particularly to a game apparatus, a game method and a game system capable of realizing a multiplayer gameplay using a plurality of game apparatuses capable of performing wireless communication with each other.

### Description of the Background Art

Conventionally, there is a technique in which other game apparatuses each adjusts a transmission time of a signal based on a reception time of a signal transmitted from a reference game apparatus (Japanese Laid-Open Patent Publication No. 2000-135380 (hereinafter referred to as "patent document 1"), for example).

Conventionally, there is also a technique in which a master game apparatus transmits time information indicating a specific time to a client game apparatus, and the client game apparatus adjusts a game processing cycle based on the received time information (Japanese Laid-open Patent Publication No. 2005-261856 corresponding to US 2005-0221897 (hereinafter referred to as "patent document 2"), for example).

Conventionally, there is also a technique in which a master game apparatus transmits a reset command to a client game apparatus in a constant cycle, and the client game apparatus resets a synchronization counter in response to the received reset command (Japanese Laid-Open patent Publication No. 8-243255 (hereinafter referred to as "patent document 3"), for example).

However, in the technique disclosed in patent document 1, communication timings are merely adjusted between a plurality of game apparatuses. With the technique disclosed in patent document 1 only, processing cycles to be executed by the plurality of game apparatuses cannot be synchronized to each other.

Furthermore, in the technique disclosed in patent document 2, the master game apparatus needs to transmit the time information to the client game apparatus on a regular basis, thereby correspondingly deteriorating a usage efficiency of a communication line.

Still furthermore, the technique disclosed in patent document 3 is effective only for wired communication. However, in the case where the technique disclosed in patent document 3 is applied to wireless communication, problems such as delay and jitter occur, thereby making it impossible to easily apply the technique disclosed in patent document 3 to wireless communication.

US 5 618 045 discloses an interactive multiple player game system wherein the clocks of game devices are synchronized.

EP 0 615 363 A1 discloses a wireless local area network apparatus wherein the operation of a receiver is accurately synchronized with periodic signals from a transmitter which are generated using a modulo n counter.

### SUMMARY OF THE INVENTION

Therefore, an object of the present invention is to provide a game apparatus, a game method and a game system capable of easily synchronizing, when performing a multiplayer gameplay using a plurality of game apparatuses capable of performing wireless communication with each other, times at which the plurality of game apparatuses execute predetermined processes.

This object is achieved by the invention as defined in the independent claims. Embodiments of the invention are defined in the dependent claims.

The present invention has the following features to attain the object mentioned above. The reference numerals, step numbers and the like in the parentheses indicate the correspondence with the embodiment described below in order to aid in understanding the present invention and are not intended to limit, in any way, the scope of the present invention.

Agameapparatus (10a) which realizes a multiplayer gameplay using the game apparatus (10a) and at least one other game apparatus (10b) capable of performing wireless communication with each other, comprises: a wireless module (12a) having a time synchronization function of synchronizing a timer (124a) provided inside the wireless module (12a) to another timer (124b) provided inside another wireless module (12b) of the at least one other game apparatus (10b) which is set as a communication party for the multiplayer gameplay; a processing section (14a, 18a) for executing a predetermined process; and an adjustment section (14a) for adjusting a time at which the processing section executes the predetermined process based on a value of the timer (124a) of the wireless module of the game apparatus.

The processing section may execute a process of generating image data and storing the image data in a display buffer, and the game apparatus may further include an output section for outputting the image data stored in the display buffer to a display section, and the adjustment section may adjust a time at which the output section outputs the image data to the display section based on the value of the timer of the wireless module of the game apparatus.

The processing section may execute a process of generating image data and storing the image data in a display buffer, and the game apparatus may further include an output section for outputting the image data stored in the display buffer, and the adjustment section may adjust a time at which the processing section updates the image data stored in the display buffer based on the value of the timer of the wireless module of the game apparatus.

The processing section may execute a process of generating image data and storing the image data in either of at least two display buffers, and the game apparatus may further include an output section for outputting the image data stored in either of the at least two display buffers to a display section, and the adjustment section may adjust a time at which the at least two display buffers used by the output section are switched between each other based on the value of the timer of the wireless module of the game apparatus.

The processing section may repeatedly execute game processing of one unit, which processing defines a predetermined procedure, and the adjustment section may adjust a time at which the processing section executes the game processing of one unit based on the value of the timer of the wireless module of the game apparatus.

The game apparatus may further comprise an input section operated by a player, wherein the processing section may execute the predetermined process based on operation information inputted to the input section, and the adjustment section may adjust a time at which the predetermined process, which is executed by the processing section based on the operation information, is executed based on the value of the timer of the wireless module of the game apparatus.

The wireless module may determine a time at which the operation information is exchanged with the at least one other game apparatus based on the value of the timer.

The game apparatus may further comprise a counter for measuring a processing cycle, wherein the processing section may execute the predetermined process in a cyclic manner based on a value of the counter, and the adjustment section may adjust the value of the counter based on the value of the timer of the wireless module of the game apparatus.

The wireless module may include interrupt signal outputting means of outputting an interrupt signal in a constant cycle based on the value of the timer, and the adjustment section may adjust a time at which the predetermined process is executed based on a time at which the wireless module outputs the interrupt signal. Thus, a change in the value of the timer included in the wireless module can be minimized.

The game apparatus may further comprise a counter for measuring a processing cycle, wherein the processing section may execute the predetermined process in a predetermined cycle based on a value of the counter, the interrupt signal outputting means may output the interrupt signal in the predetermined cycle based on the value of the timer, and the adjustment section may adjust the value of the counter such that the value of the counter obtained when the wireless module outputs the interrupt signal becomes close to a predetermined fixed value.

The wireless module may transmit a beacon signal to the said another wireless module, and include beacon interval setting means of setting a cycle of the beacon signal transmitted from the wireless module to a constant cycle, and the interrupt signal outputting means may output the interrupt signal when a transmission time of the beacon signal (a reception time of the beacon signal for the said another module acting as a client) arrives.

The processing section may repeatedly execute the predetermined process based on data necessary for game processing, which is received from the said another wireless module in a constant cycle, and include beacon interval setting means of setting a cycle of a beacon signal transmitted by the wireless module to the constant cycle, and the wireless module may transmit the beacon signal in a constant cycle based on the value of the timer, and transmit or receive the data necessary for the game processing to or from the said another wireless module each time the wireless module transmits the beacon signal to the said another wireless module, and the adjustment section may adjust the time at which the processing section executes the predetermined process based on a transmission time of the beacon signal, which is obtained based on the value of the timer of the wireless module of the game apparatus.

The game apparatus may further comprise an input section operated by a player, wherein the processing section may repeatedly execute the predetermined process based on operation information inputted to an input section of the game apparatus and the operation information inputted to another input section of the at least one other game apparatus, and the wireless module may exchange the operation information with the at least one other game apparatus each time the wireless module transmits the beacon signal to the said another wireless module.

The wireless module may further include interrupt signal outputting means of outputting the interrupt signal based on the value of the timer, when the transmission time of the beacon signal arrives, and the adjustment section may adjust a time at which the predetermined process is executed based on a time at which the wireless module outputs an interrupt signal.

The wireless module may transmit or receive the data necessary for the game processing to or from the said another wireless module after transmitting the beacon signal to the said another wireless module, and further include a sleep function of operating in a sleep mode until the transmission time of the beacon signal subsequently arrives after transmitting or receiving the data necessary for the game processing to or from the said another wireless module.

The processing section may read the value of the timer of the wireless module in a constant cycle, and adjust the time at which the processing section executes the predetermined process based on the read value.

The processing section may repeatedly execute game processing of one unit, which processing defines a predetermined procedure, and read the value of the timer of the wireless module in a cycle N times (N is a natural number) as long as the game processing of one unit.

The wireless module may synchronize the timer provided inside the wireless module to the said another timer provided inside the said another wireless module of the at least one other game apparatus based on an IEEE802.11 standard.

Another game apparatus (10a) which realizes a multiplayer gameplay using the game apparatus (10a) and at least one other game apparatus (10b) capable of performing wireless communication with each other, comprises: a wireless module (12a) having a time synchronization function of synchronizing a timer (124a) provided inside the wireless module (12a) to another timer (124b) provided inside another wireless module (12b) of the at least one other game apparatus (10b) which is set as a communication party for the multiplayer gameplay; a processing section (14a, 18a) for executing a predetermined process; and a determination section (14a) for determining a time at which the processing section executes the predetermined process based on a value of the timer (124a) of the wireless module of the game apparatus.

Still another game apparatus (10a) which realizes a multiplayer gameplay using the game apparatus (10a) and at least one other game apparatus (10b) capable of performing wireless communication with each other, comprises: a connector (not shown) connectable to a wireless module (12a) having a time synchronization function of synchronizing a timer (124a) provided inside the wireless module (12a) to another timer (124b) provided inside another wireless module (12b) of the at least one other game apparatus (10b) which is set as a communication party for the multiplayer gameplay; a processing section (14a, 18a) for executing a predetermined process; an adjustment section (14a) for adjusting a time at which the processing section executes the predetermined process based on the value of the timer (124a) of the wireless module connected to the connector.

A wireless module (12a) which realizes a multiplayer gameplay using a game apparatus (10a) and at least one other game apparatus (10b), comprises: time synchronization means (123a) of synchronizing a timer (124a) provided inside the wireless module (12a) to another timer (124b) provided inside another wireless module (12b); and interrupt signal outputting means (123a) of outputting an interrupt signal in a constant cycle based on a value of the timer (124a).

A game system is a game system which realizes a multiplayer gameplay using a plurality of game apparatuses including at least a first game apparatus (10a) and a second game apparatus (10b), all of which are capable of performing wireless communication with each other. The first game apparatus includes: a first wireless module (12a) having a time synchronization function of synchronizing a timer (124a) provided inside the first wireless module (12a) to another timer (124b) provided inside a second wireless module (12b) of the second game apparatus; a first processing section (14a, 18a) for executing a predetermined process; and a first adjustment section (14a) for adjusting a time at which the first processing section executes the predetermined process based on a value of the timer (124a) of the first wireless module. The second game apparatus includes: the second wireless module having the time synchronization function of synchronizing the said another timer provided inside the second wireless module to the timer provided inside the first wireless module of the first game apparatus; a second processing section (14b, 18b) for executing a predetermined process; and a second adjustment section (14b) for adjusting a time at which the second processing section executes the predetermined process based on a value of the said another timer (124b) of the second wireless module.

According to the present invention, it becomes possible to easily synchronize, when performing the multiplayer gameplay using a plurality of game apparatuses capable of performing wireless communication with each other, times at which the plurality of game apparatuses execute the predetermined processes .

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram illustrating a configuration of a game system according to a first embodiment of the present invention;
FIG. 2 is a sequence diagram illustrating an operation of the game system according to the first embodiment of the present invention;
FIG. 3 is diagram illustrating a corresponding relationship between a display screen and a value of a V counter 181a;
FIG. 4 is a flowchart illustrating a flow of a process executed by a wireless module 12a and a wireless module 12b according to the first embodiment of the present invention;
FIG. 5 is a flowchart illustrating a flow of a main process executed by a game processing section 14a and a game processing section 14b according to the first embodiment of the present invention;
FIG. 6 is a flowchart illustrating a TBTT interrupt process executed by the game processing section 14a and the game processing section 14b according to the first embodiment of the present invention;
FIG. 7 is a flowchart illustrating a V blank interrupt process executed by the game processing section 14a and the game processing section 14b according to the present invention;
FIG. 8 is a sequence diagram illustrating a variant of the operation of the game system according to the first embodiment of the present invention;
FIG. 9 is a block diagram illustrating the configuration of the game system according to a second embodiment of the present invention;
FIG. 10 is a sequence diagram illustrating the operation of the game system according to the second embodiment of the present invention;
FIG. 11 is a flowchart illustrating the flow of the process executed by the wireless module 12a and the wireless module 12b according to the second embodiment of the present invention; and
FIG. 12 is a flowchart illustrating the Vblank interrupt process executed by the game processing section 14a and the game processing section 14b according to the second embodiment of the present invention.

### DESCRIPTION OF THE PREFERRED EMBODIMENTS

Hereinafter, various embodiments of the present invention will be described.

### (first embodiment)

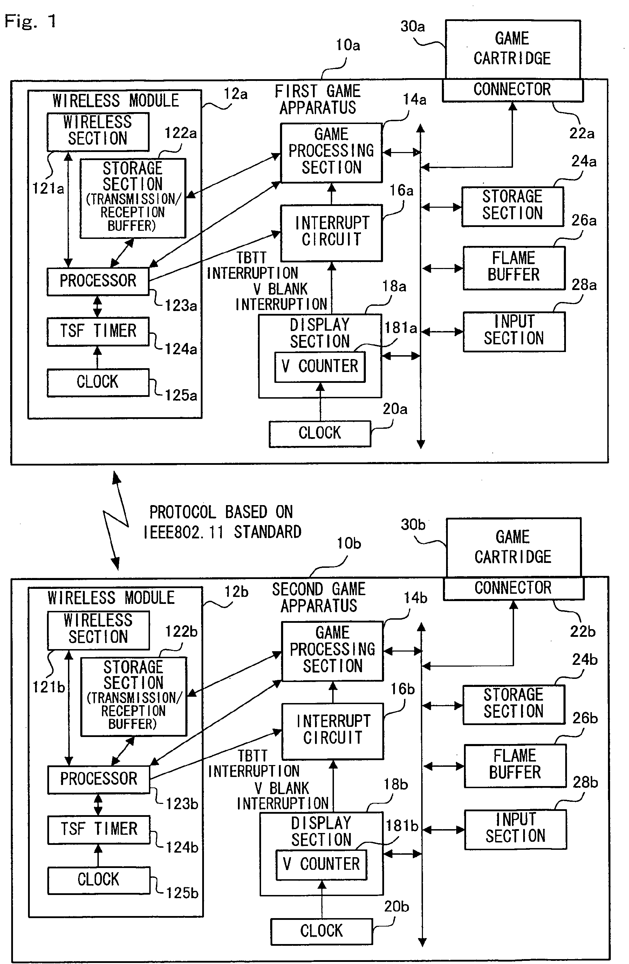

FIG. 1 is a block diagram illustrating a configuration of a game system according to a first embodiment of the present invention. Although the present embodiment illustrates an example where two game apparatuses (i.e., a first game apparatus 10a and a second game apparatus 10b) perform wireless communication with each other, the present invention is not limited thereto. The present invention is applicable to a case where three or more game apparatuses perform wireless communication with each other.

The first game apparatus 10a and the second game apparatus 10b are set to each other as communication parties for a multiplayer gameplay. For example, prior to starting the multiplayer gameplay, the first game apparatus 10a exchanges its own apparatus ID (which may be added with a user ID or a game program ID of a game program executed by the game apparatus 10a) with the second game apparatus 10b by wireless communication, and presents information concerning the second game apparatus 10b by means of an image, sound or the like to a player of the first game apparatus 10a. Based on the information presented as such, the player of the first game apparatus 10a determines whether or not to start the multiplayer gameplay together with a player of the second game apparatus 10b. If the both players instruct the game apparatuses 10a and 10b respectively to start the multiplayer gameplay together with each other via an input section, the first game apparatus 10a and the second game apparatus 10b are set to each other as the communication parties for the multiplayer gameplay.

The first game apparatus 10a comprises a wireless module 12a, a game processing section 14a, an interrupt circuit 16a, a display section 18a, a clock 20a, a storage section 24a, a flame buffer 26a, and an input section 28a. The second game apparatus 10b has the same configuration as that of the first game apparatus 10a, and therefore a detailed description of the second game apparatus 10b will be omitted.

To the first game apparatus 10a, a game cartridge 30a is connected via a connector 22a. The game cartridge 30a stores a game program for realizing a game which can be simultaneously played by a plurality of players performing wireless communication between a plurality of game apparatuses . The game program is loaded to the storage section 24a via the connector 22a and executed by the game processing section 14a. Note that the game program may be supplied to the storage section 24a from a storage medium other than the game cartridge 30a such as an optical disc or a magnetic disc, or from an external computer or other game apparatuses by wired communication or wireless communication.

The wireless module 12a has a function of performing wireless communication with a wireless module 12b of the second game apparatus 10b in accordance with a communication protocol which complies with a wireless LAN standard IEEE802.11. Although the present embodiment illustrates an example where the wireless module 12a is embedded in the first game apparatus 10a, the present invention is not limited thereto. The wireless module 12a may be connected to the first game apparatus 10a via a not shown connector included in the first game apparatus 10a.

The wireless module 12a includes a wireless section 121a, a storage section 122a, a processor 123a, a TSF timer 124a and a clock 125a. The wireless section 121a converts a baseband signal outputted from the processor 123a into a wireless signal, and also receives a wireless signal transmitted from the wireless module 12b of the second game apparatus 12b and converts the received wireless signal into a baseband signal. The storage section 122a is used by the processor 123a for temporarily retaining data. In addition, the storage section 122a is also used as a transmission/reception buffer for passing data, which is transmitted and received between the first game apparatus 10a and the second game apparatus 10b (i.e., data to be transmitted to the second game apparatus 10b and data received from the second game apparatus 10b), between the game processing section 14a and the wireless module 12a. The processor 123a controls wireless communication between the wireless module 12a and the wireless module 12b based on the wireless LAN standard IEEE802.11. The TSF timer 124a is a timer for measuring a time period based on a clock signal outputted from the clock 125a included in the wireless module 12a, and is used for synchronizing a process executed by the wireless module 12a and a process executed by the wireless module 12b. A value of the TSF timer 124a indicates an elapsed time since the TSF timer 124a starts counting.

In the present embodiment, it is assumed that the wireless module 12a operates as a master, and the wireless module 12b operates as a client. Note that when a plurality of wireless modules perform communication with each other, any method may be used for determining one of the wireless modules acting as a master . Each of the wireless module 12a and the wireless module 12b has a TSF (Timing Synchronization Function) for synchronizing the process executed by the wireless module 12a and the process executed by the wireless module 12b. The wireless module 12a acting as the master transmits a beacon signal on a regular basis . The game processing section 14a can set a transmission cycle of the beacon signal to any cycle (the transmission cycle of the beacon signal may be fixed) . In the present embodiment, the transmission cycle of the beacon signal is set to 16.7msec which is the same as a game processing cycle (i.e., a cycle in which game processing of one unit, which processing defines a predetermined procedure, is repeatedly executed, the cycle being 16.7msec in the present embodiment) of the game processing section 14a. However, the transmission cycle of the beacon signal is not limited thereto. The transmission cycle of the beacon signal may be an integral multiple of the game processing cycle. The reason therefor will be described later. The beacon signal includes information about the value of the TSF timer 124a (hereinafter referred to as a "TSF timer value") indicating a transmit time of the beacon signal and a beacon interval (a transmission interval of the beacon signal) . A processor 123b of the wireless module 12b which receives a beacon signal transmitted from the wireless module 12a changes a value of a TSF timer 124b so as to become equal to the TSF timer value included in the received beacon signal as appropriate. As described above, the value of the TSF timer 124b of the wireless module 12b is changed as appropriate based on the beacon signal which is transmitted in a cyclic manner, thereby making it possible to synchronize the TSF timer 124a of the wireless module 12a and the TSF timer 124b of the wireless module 12b.

Since the beacon signal includes the information about the beacon interval as described above, the wireless module 12b can recognize a TBTT (Target Beacon Transmit Time) based on the value of the TSF timer 124b and the information about the beacon interval. When the TBTT arrives, the wireless module 12a acting as the master starts an operation of transmitting a beacon signal, and the wireless module 12b acting as the client starts an operation of preparing to receive the beacon signal.

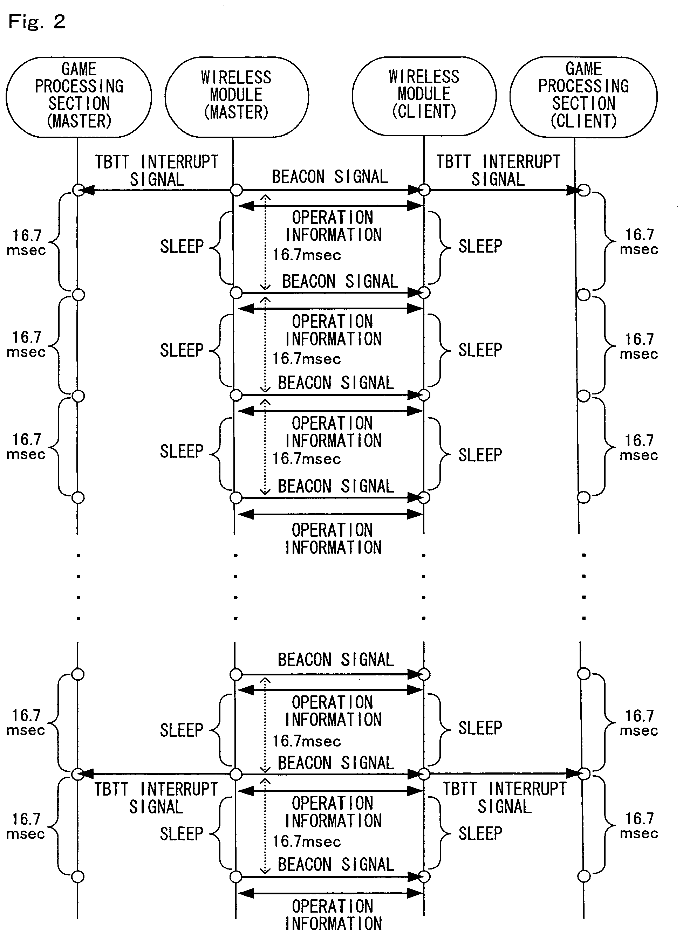

In the present embodiment, as shown in FIG. 2, a beacon signal is transmitted from the wireless module 12a acting as the master in a cycle of 16.7msec, and immediately after the beacon signal is transmitted, operation information is transmitted/received between the wireless module 12a acting as the master and the wireless module 12b acting as the client, in order to share the operation information (information indicating a content of an operation inputted to the input section 28 by the player of each of the game apparatuses) between the first game apparatus 10a and the second game apparatus 10b. When the transmission/reception of the operation information is completed, each of the wireless module 12a and the wireless module 12b operates in a sleep mode until the TBTT subsequently arrives. When the TBTT subsequently arrives (to be more precise, immediately before the TBTT subsequently arrives), each of the wireless module 12a and the wireless module 12b returns to a normal mode from the sleep mode, and the wireless module 12a starts the operation of transmitting another beacon signal and the wireless module 12b starts the operation of preparing to receive the said another beacon signal. As such, while sharing the operation information between the first game apparatus 10a and the second game apparatus 10b in a cycle of 16.7msec, power savings of the wireless module 12a and the wireless module 12b can be achieved.

Note that it does not necessarily have to be the operation information which is transmitted/received between the wireless module 12a and the wireless module 12b. For example, a game parameter and the like generated by the game processing executed by each of the game apparatuses 10a and 10b may be transmitted/received between the wireless modules 12a and 12b.

Furthermore, it is not necessary for each of the wireless modules 12a and 12b to be in the sleep mode after transmitting/receiving the operation information.

In the present embodiment, when the TBTT arrives, the processor 123a outputs an interrupt signal (hereinafter referred to as a TBTT interrupt signal). The same is also true of the processor 123b. The present embodiment assumes that the TBTT interrupt signal is outputted every twelve times the TBTT arrives. However, a frequency in which the TBTT interrupt signal is outputted is not limited there to. The TBTT interrupt signal may be outputted every N times (N is a natural number) the TBTT arrives. In this case, a cycle in which the TBTT interrupt signal is outputted is a cycle N times as long as the game processing cycle (16.7msec) of the game processing section 14a.

The game processing section 14a executes the game processing in accordance with the game program stored in the game cartridge 30a. The game processing is executed based on signals outputted from the input section 28a and the operation information, about the second game apparatus 10b, which is received by the wireless module 12a (information concerning an operation inputted by a user of the second game apparatus 10b). The game processing section 14a generates a game image reflecting a result of the game processing, and writes image data of the game image into the flame buffer 26a. The game image is updated in a cycle of 16.7msec.

The interrupt circuit 16a outputs the TBTT interrupt signal output ted from the wireless module 12a and a V blank interrupt signal outputted from the display section 18a, which is to be described later, to the game processing section 14a as interrupt request signals. When any interrupt request signal is outputted from the interrupt circuit 16a, the game processing section 14a temporarily suspends the game processing so as to execute a predetermined interrupt process in response to the interrupt request signal, and resumes the game processing after the interrupt process is completed.

The display section 18a has a display screen, and displays the game image on the display screen based on the image data written by the game processing section 14a into the flame buffer 26a. The display screen is updated in a cycle of 16.7msec. The display section 18a is typically comprised of a liquid crystal panel and a display control circuit. The display section 18a has a V counter 181a, and electrical signals corresponding to the image data read from the flame buffer 26a are supplied to pixels on a scanning line corresponding to a value of the V counter 181a. The value of the V counter 181a is updated at a predetermined interval based on a clock signal outputted from the clock 20a. The value of the V counter 181a is reset to "0" after indicating "262".

In the display section 18a, any pixel of an image displayed on the display screen is not updated during a time period from when scanning which is sequentially performed from a top scanning line of the display screen to a bottom scanning line thereof is completed to when the scanning is returned to the top scanning line (hereinafter referred to as a "V blank period") . During the V blank period, the display section 18a does not access the flame buffer 26a. Thus, the game processing section 14a writes the image data into the flame buffer 26a during the V blank period, thereby making it possible to update the image data without distorting the display image.

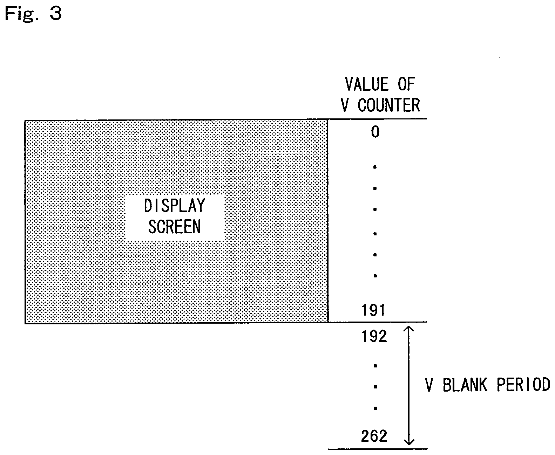

Note that the V counter 181a continues counting even during the V blank period. In the present embodiment, as shown in FIG. 3, the value of the V counter 181a obtained when scanning is performed on the top scanning line of the display screen is "0", the value of the V counter 181a obtained when the scanning is performed on the bottom scanning line of the display screen is "191", and the value of the V counter 181a obtained immediately before the scanning is performed on the top scanning line of the display screen is "262". In this case, a time period during which the value of the V counter 181a is within a range from "192" to "262" is the V blank period. The display section 18a has a function of outputting the V blank interrupt signal when the V blank period arrives (i.e., when the value of the V counter 181a becomes "192"). The interrupt circuit 16a which receives the V blank interrupt signal from the display section 18a transmits a V blank interrupt request signal to the game processing section 14a. The game processing section 14a starts writing the image data into the flame buffer 26a in response to the V blank interrupt request signal, thereby allowing the game processing section 14a to write the image data into the flame buffer 26a during the V blank period.

The storage section 24a is a storage area used by the game processing section 14a executing the game program.

The flame buffer 26a is a storage area for temporarily retaining the image data generated by the game processing section 14a so as to be outputted to the display section 18a.

The input section 28a is a game controller operated by the player, and outputs a signal in accordance with an operation performed by the player.

In the present embodiment, the game processing section 14a executes the game processing in the same cycle as that in which the display section 18a updates the display screen (16.7msec). Specifically, a series of processes in which the game processing section 14a (1) shares the operation information between the first game apparatus 10a and the second game apparatus 10b, (2) executes the game processing based on the shared operation information, and (3) generates the game image reflecting a result of the game processing and writes the generated image data into the flame buffer 26a is repeated in a cycle of 16.7msec.

In the case where the players of the first game apparatus 10a and the second game apparatus 10b play the multiplayer game by causing the first game apparatus 10a and the second game apparatus 10b to perform wireless communication with each other, it is preferable that the game processing cycle of the game processing section 14a of the first game apparatus 10a coincides with that of the game processing section 14b of the second game apparatus 10b. This is because if the game processing cycles between the game processing sections 14a and 14b are shifted from each other, a game processing result of the first game apparatus 10a and a game processing result of the second game apparatus 10b may be accordingly shifted from each other.

In the present embodiment, the game processing section 14a of the first game apparatus 10a adjusts the V counter 181a with respect to a time at which the wireless module 12a outputs the TBTT interrupt signal. Similarly, the game processing section 14b of the second game apparatus 10b adjusts the V counter 181b with respect to a time at which the wireless module 12b outputs the TBTT interrupt signal. Hereinafter, an adjustment process executed by the game processing section 14a adjusting the V counter 181a will be described in detail.

In an interrupt process to be executed when the wireless module 12a outputs the TBTT interrupt signal (hereinafter referred to as a "TBTT interrupt process"), the game processing section 14a temporarily stores the value of the V counter 181a obtained when the TBTT interrupt signal is outputted (hereinafter referred to as a "V counter value at TBTT" in the storage section 24a. Furthermore, in another interrupt process to be executed when the display section 18a outputs the V blank interrupt signal (hereinafter referred as a "V blank interrupt process"), the game processing section 14a calculates a difference between the V counter value at TBTT stored in the storage section 24a and a predetermined ideal value ("0" in the present embodiment, for example), thereby increasing or decreasing the value of the V counter 181a based on the difference such that the value of the V counter 181a obtained when the TBTT interrupt signal is outputted becomes close to the predetermined ideal value. For example, when the V counter value at TBTT is "2", "2" is subtracted from the value of the V counter 181a. When the V counter value at TBTT is "260", "3" is added to the value of the V counter 181a. As described above, the value of the V counter 181a is not changed when the TBTT interrupt process is executed, but changed when the V blank interrupt process is executed. This is because the value of the V counter 181a can be changed during the V blank period. During the V blank period, the display screen is never distorted even if the value of the V counter 181a is changed. Only if distortion on the display screen is allowed, the value of the V counter 181a may be changed at any time.

Note that in the case where a certain value is subtracted from the value of the V counter 181a, the game processing section 14a adjusts the subtracted value of the V counter 181a so as not to be smaller than the value of the V counter 181a obtained at a time of V blank interruption ("192" in the present embodiment) . Specifically, in the case where "2" is subtracted from the value of the V counter 181a, the value of the V counter 181a is not to be changed until the value of the V counter 181a becomes "195" or greater. In this case, the subtracted value of the V counter 181a will be "193" or greater.

When the difference between the V counter value at TBTT and the predetermined ideal value is greater than a predetermined value ("4", for example), instead of causing the value of the V counter 181a obtained when the TBTT interrupt signal is outputted to instantly coincide with the predetermined ideal value, the value of the V counter 181a may be caused to become close to the predetermined ideal value gradually in a plurality of stages. This can be realized, for example, when a range within which the value of the V counter 181a can be changed at one time is limited from "-4" to "+4". Thus, even when there is a great difference between the V counter value at TBTT and the predetermined ideal value, the game processing cycle can be adjusted without causing the player to feel awkward.

On the other hand, when the difference between the V counter value at TBTT and the predetermined ideal value is smaller than a predetermined value ("2", for example), a change in the value of the V counter 181a may be omitted.

By executing the adjustment process as described above, the game processing cycle of the game processing section 14a is synchronized to the TBTT in the wireless module 12a. Similarly, in the case of the second game apparatus 10b, the game processing section 14b adjusts the V counter 181b, thereby synchronizing the game processing cycle of the game processing section 14b to the TBTT in the wireless module 12b. Here, the TSF allows the TBTT in the wireless module 12a and the TBTT in the wireless module 12b to be synchronized to each other. As a result, the game processing cycle of the game processing section 14a and the game processing cycle of the game processing section 14b are also synchronized to each other accordingly.

Hereinafter, described will be flows of processes executed by the game processing section 14a, the game processing section 14b, the wireless module 12a and the wireless module 12b when executing the game in accordance with the game program loaded to the storage section 24a (the storage section 24b) from the game cartridge 30a (the game cartridge 30b).

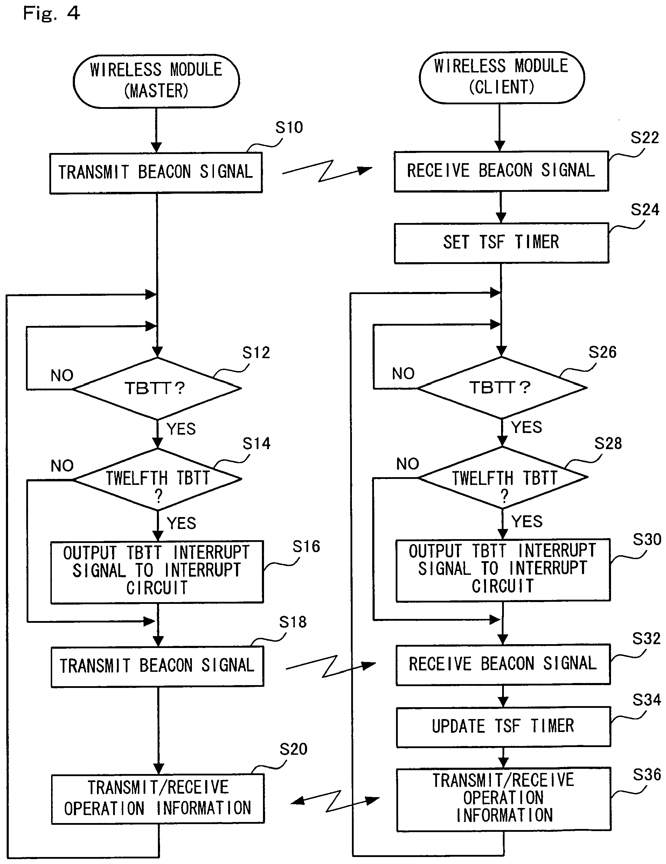

With reference to a flowchart shown in FIG. 4, the flow of the process executed by the wireless module 12a and the wireless module 12b will be firstly described.

In step S10, the processor 123a of the wireless module 12a acting as the master outputs a beacon signal via the wireless section 121a. The beacon signal includes the value of TSF timer 124a obtained at a transmit time of the beacon signal and the information about the beacon interval set by the game processing section 14a.

In step S12, based on the value of the TSF timer 124a and the beacon interval, the processor 123a determines whether or not a TBTT arrives . When it is determined that the TBTT arrives, the process proceeds to step S14. Note that when the wireless module 12a operates in the sleep mode, the wireless module 12a returns to the normal mode from the sleep mode in response to an arrival of the TBTT (strictly speaking, the wireless module 12a returns to the normal mode from the sleep mode immediately prior to the TBTT).

In step S14, the processor 123a determines whether or not the currently arriving TBTT is a twelfth TBTT counting from when the TBTT interrupt signal is most recently outputted. When it is determined that the currently arriving TBTT is the twelfth TBTT, the process proceeds to step S16. On the other hand, when it is determined that the currently arriving TBTT is not the twelfth TBTT, the process proceeds to step S18 . As a method of determining whether or not the currently arriving TBTT is the twelfth TBTT counting from when the TBTT interrupt signal is most recently outputted, a counter may be prepared in the storage section 122a so as to count the number of times the TBTT arrives from when the TBTT interrupt signal is most recently outputted. Then, the counter may count up each time the TBTT arrives, and the counter may be reset when the TBTT interrupt signal is newly outputted.

In step S16, the processor 123a outputs the TBTT interrupt signal to the interrupt circuit 16a.

In step S18, the processor 123a outputs another beacon signal via the wireless section 121a.

In step S20, via the wireless section 121a, the processor 123a transmits to the second game apparatus 10b the operation information about the first game apparatus 10a which is stored in the storage section 122a by the game processing section 14a, and receives the operation information about the second game apparatus 10b from the second game apparatus 10b and stores the received operation information about the second game apparatus 10b in the storage section 122a, in accordance with a predetermined procedure. Thereafter, the wireless module 12a shifts to the sleep mode and the process returns to step S12.

In the present embodiment, a transmission cycle of the beacon signal is synchronized to the game processing cycle, and the operation information is exchanged between the two wireless modules at the beacon interval. Therefore, each of the two wireless modules can obtain most recent operation information about the other communication party in each game processing cycle, and thus it is effective that a process can be executed based on the most recent operation information in the each game processing cycle. Furthermore, since each of the wireless modules recognizes the TBTT (Target Beacon Transmit Time), times at which the operation information is transmitted/received between the wireless modules can be effectively synchronized to each other, thereby making it possible to cause the wireless modules to be intermittently operated in the sleep mode as appropriate.

A process from steps S12 to S20 is repeated in a cycle of 16.7msec which is the transmission cycle of the beacon signal.

Next, in step S22, the processor 123b of the wireless module 12b acting as the client receives the beacon signal (which is transmitted from the wireless module 12a in step S10) via the wireless section 121b.

In step S24, the processor 123b sets the value of the TSF timer 124b based on the TSF timer value included in the beacon signal received in step S22.

In step S26, based on the value of the TSF timer 124b and the beacon interval included in the beacon signal received in step S20, the processor 123b determines whether or not a TBTT arrives. When it is determined that the TBTT arrives, the process proceeds to step S28. Note that when the wireless module 12b operates in the sleep mode, the wireless module 12b returns to the normal mode from the sleep mode in response to the arrival of the TBTT (strictly speaking, the wireless module 12b returns to the normal mode from the sleep mode immediately prior to the TBTT).

In step S28, the processor 123b determines whether or not the currently arriving TBTT is a twelfth TBTT counting from when the TBTT interrupt signal is most recently outputted. When it is determined that the currently arriving TBTT is the twelfth TBTT, the process proceeds to step S30. On the other hand, when it is determined that the currently arriving TBTT is not the twelfth TBTT, the process proceeds to step S32.

In step S30, the processor 123b outputs the TBTT interrupt signal to the interrupt circuit 16b.

In step S32, the processor 123b receives the said another beacon signal (which is transmitted from the wireless module 12a in step S18) via the wireless section 121b.

In step S34, based on the TSF timer value included in the said another beacon signal received in step S32 (the value of the TSF timer 124a obtained when the wireless module 12a transmits the said another beacon signal in step S18), the processor 123b updates the value of the TSF timer 124b, thereby correcting a difference between the TSF timer 124a and the TSF timer 124b.

In step S36, via the wireless section 121b, the processor 123b receives the operation information about the first game apparatus 10a from the first game apparatus 10a and stores the received operation information about the first game apparatus 10a in the storage section 122b, and transmits to the first game apparatus 10a the operation information about the second game apparatus 10b which is stored in the storage section 122b by the game processing section 14b, in accordance with a predetermined procedure. Thereafter, the wireless module 12b shifts to the sleep mode and the process returns to step S26.

A process from steps S26 to S36 is repeatedly executed in a cycle of 16. 7msec which is the transmission cycle of the beacon signal.

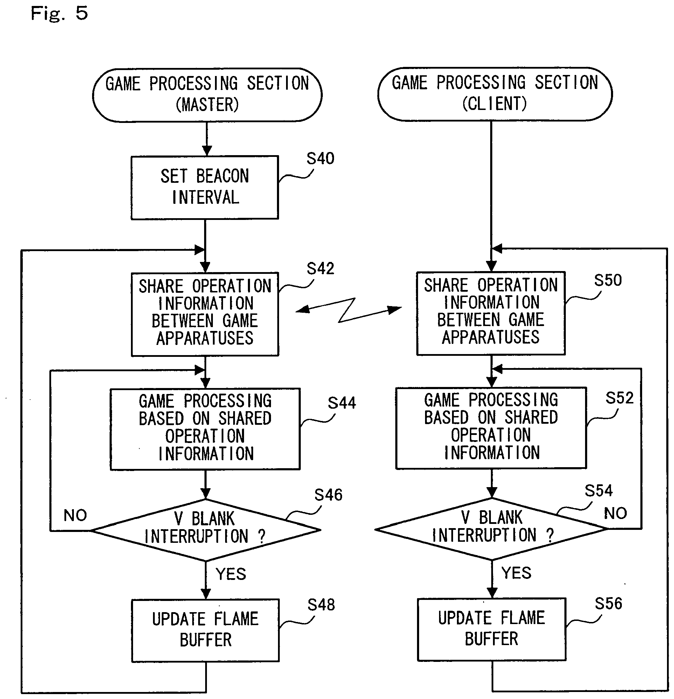

Next, with reference to a flowchart shown in FIG. 5, the flow of the main process executed by the game processing section 14a and the game processing section 14b will be described.

In step S40, the game processing section 14a of the first game apparatus 10a acting as the master sets an interval of a beacon signal to be outputted from the wireless module 12a to a time period N times as long as the game processing cycle (16.7msec in the present embodiment).

In step S42, the game processing section 14a shares the operation information between the first game apparatus 10a and the second game apparatus 10b. Specifically, the game processing section 14a stores the operation information about the first game apparatus 10a in a transmission buffer (the storage section 122a) of the wireless module 12a, and obtains the operation information about the second game apparatus 10b stored in a reception buffer (the storage section 122a).

In step S44, based on the operation information shared in step S42 between the first game apparatus 10a and the second game apparatus 10b, the game processing section 14a executes the game processing. For example, when a first character operated by the player of the first game apparatus 10a and a second character operated by the player of the second game apparatus 10b exist in a shared virtual game space, the game processing section 14a controls the first character based on the operation information about the first game apparatus 10a and controls the second character based on the operation information about the second game apparatus 10b.

In step S46, the game processing section 14a determines whether or not the interrupt circuit 16a outputs a V blank interrupt signal as the interrupt request signal. When it is determined that the V blank interrupt signal is outputted, the process proceeds to step S48. On the other hand, when it is determined that the V blank interrupt signal is not yet outputted, the game processing in step S44 continues until the V blank interrupt signal is outputted. Note that when the V blank interruption occurs even in the middle of the game processing in step S44, the game processing in step S44 is stopped and the process proceeds to step S48.

In step S48, the game processing section 14a generates game image data reflecting a result of the game processing in step S44 and writes the game image data into the flame buffer 26a. Thereafter, the process returns to step S42.

A process from steps S42 to S48 is repeatedly executed in a cycle of 16.7msec which is the game processing cycle of the game processing section 14a (in the present embodiment, the game processing cycle of the game processing section 14a is equivalent to a cycle in which the display screen of the display section 18a is updated).

Next, in step S50, the game processing section 14b of the second game apparatus 10b acting as the client shares the operation information between the first game apparatus 10a and the second game apparatus 10b. Specifically, the game processing section 14b stores the operation information about the second game apparatus 10b in a transmission buffer (the storage section 122b) of the wireless module 12b, and obtains the operation information about the first game apparatus 10a stored in a reception buffer (the storage section 122b).

In step S52, based on the operation information shared in step S50 between the first game apparatus 10a and the second game apparatus 10b, the game processing section 14b executes the game processing. For example, when the first character operated by the player of the first game apparatus 10a and the second character operated by the player of the second game apparatus 10b exist in the shared virtual game space, the game processing section 14b controls the first character based on the operation information about the first game apparatus 10a and controls the second character based on the operation information about the second game apparatus 10b.

In step S54, the game processing section 14b determines whether or not the interrupt circuit 16b outputs a V blank interrupt signal as the interrupt request signal. When it is determined that the Vblank interrupt signal is outputted, the process proceeds to step S56. On the other hand, when it is determined that the V blank interrupt signal is not yet outputted, the game processing in step S52 continues until the Vblank interrupt signal is outputted. Note that when the V blank interruption occurs even in the middle of the game processing in step S52, the game processing in step S52 is stopped and the process proceeds to step S56.

In step S56, the game processing section 14b generates game image data reflecting a result of the game processing in step S52 and writes the game image data into the flame buffer 26b. Thereafter, the process returns to step S50.

A process from steps S50 to S56 is repeatedly executed in a cycle of 16.7msec which is the game processing cycle of the game processing section 14b (in the present embodiment, the game processing cycle of the game processing section 14b is equivalent to a cycle in which the display screen of the display section 18b is updated).

Note that when the interrupt circuit 16a outputs the interrupt request signal, the game processing section 14a suspends the aforementioned main process so as to execute the interrupt process (the TBTT interrupt process or the V blank interrupt process) in response to the interrupt request signal. The same is also true of the game processing section 14b.

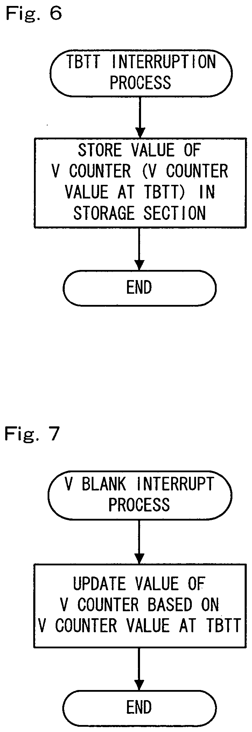

In the TBTT interrupt process, as shown in FIG. 6, the game processing section 14a reads the value of the V counter 181a obtained when the TBTT interrupt signal is outputted, and stores the value thus obtained as the V counter value at TBTT in the storage section 24a. The same is also true of the game processing section 14b.

In the V blank interrupt process, as shown in FIG. 7, based on the V counter value at TBTT stored in the storage section 24a when the TBTT interrupt process is most recently executed, the game processing section 14a updates the value of the V counter 181a. A detailed process of updating the value of the V counter 181a has been described above. The same is also true of the game processing section 14b.

As described above, in the present embodiment, based on the TBTT interrupt signal outputted from each of the wireless module 12a and the wireless module 12b in a cycle N times as long as the game processing cycle, the first game apparatus 10a and the second game apparatus 10b adjust the V counter 181a and the V counter 181b, respectively, thereby making it possible to synchronize the game processing executed by the first game apparatus 10a and the game processing executed by the second game apparatus 10b.

Particularly, the wireless module 12a and the wireless module 12b can be realized simply by adding a slight change (i.e., adding a function of outputting the TBTT interrupt signal) to a conventional wireless module which complies with the wireless LAN standard IEEE802.11, thereby making it possible to achieve the present invention at a low cost.

Furthermore, the game processing cycles of the game processing sections 14a and 14b coincide with communication cycles (cycles in which the operation information is transmitted/received) of the wireless modules 12a and 12b, respectively. Therefore, unlike the conventional art, there is no need to create the game program taking into consideration differences between the game processing cycles of the game processing sections 14a and 14b and the communication cycles of the wireless modules 12a and 12b, respectively. Thus, it becomes possible to reduce troublesome tasks required for a programming work performed by a programmer.

Although the present embodiment illustrates an example where the wireless module 12a (the wireless module 12b) operates in the sleep mode for a time period from when the operation information is transmitted/received to when the TBTT subsequently arrives, the present invention is not limited thereto.

Although the present embodiment illustrates an example where the wireless module 12a (the wireless module 12b) complies with the wireless LAN standard IEEE802. 11, the present invention is not limited thereto. Any wireless module having the TSF (a function of synchronizing timers provided inside the wireless modules) canbeused. For example, a wireless module which complies with a standard such as Bluetooth (registered trademark) or Zigbee (registered trademark) can be used.

Although the present embodiment illustrates an example where the game processing cycle is synchronized to a cycle in which the display screen is updated, the present invention is not limited thereto . The game processing cycle may be different from the cycle in which the display screen is updated. In this case, the first game apparatus 10a (the second game apparatus 10b) needs to include, other than the V counter 181a (the V counter 181b), a game processing cycle counter for measuring the game processing cycle, and the game processing section 14a (the game processing section 14b) may adjust the game processing cycle counter based on a time at which the TBTT interrupt signal is outputted.

Although the present embodiment illustrates and example where the operation information is transmitted/received in a cycle of 16.7msec, the present invention is not limited thereto. In the case where an operation performed by the player needs to be instantly reflected in the game processing such as an action game, for example, it is desirable that the operation information is frequently transmitted/received. On the contrary, in the case where the operation performed by the player does not need to be instantly reflected in the game processing such as a table game, it is not necessary to transmit/receive the operation information as frequently as the action game.

Although the present embodiment illustrates an example where the value of the V counter 181a (the V counter 181b)is adjusted so as to become close to "0" when the TBTT interrupt signal is outputted, the present invention is not limited thereto. The value of the V counter 181a (the V counter 181b) may be adjusted so as to become close to a specified value other than "0" when the TBTT interrupt signal is outputted.

The present embodiment illustrates an example where the game processing cycle is 16.7msec. However, this is merely an example and the present invention is not limited thereto.

Although the present embodiment illustrates an example where the value of the V counter 181a (the V counter 181b) is adjusted based on the TBTT interrupt signal outputted from the wireless module 12a (the wireless module 12b) in response to the arrival of the TBTT, the present invention is not limited thereto. For example, irrespective of the arrival of the TBTT, the processor 123a (the processor 123b) of the wireless module 12a (the wireless module 12b) may output an interrupt signal (conveniently referred to as a "TSF timer interrupt signal") in a cycle N times as long as the game processing cycle based on the TSF timer 124a (the TSF timer 124b), and the game processing section 14a (the game processing section 14b) may adjust the value of the V counter 181a (the V counter 181b) based on the TSF timer interrupt signal. In this case, the transmission interval of the beacon signal can be freely set irrespective of the game processing cycle. However, in this case, a counter for outputting the TSF timer interrupt signal in a predetermined cycle needs to be additionally prepared.

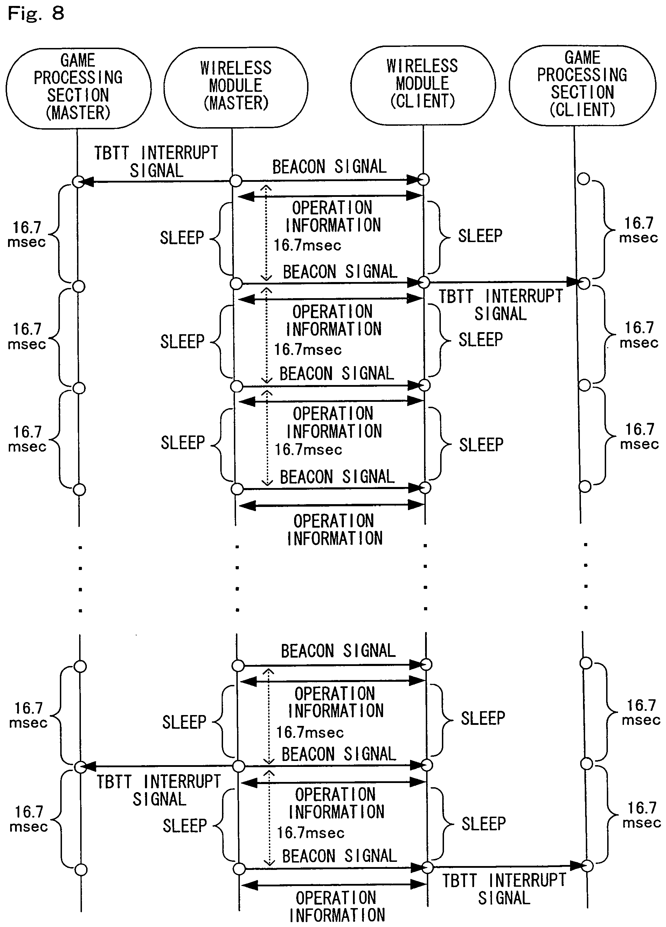

Furthermore, in an example shown in FIG. 2, the wireless module 12a acting as the master outputs the TBTT interrupt signal at the same time as the wireless module 12b acting as the client. However, the wireless module 12a does not need to output the TBTT interrupt signal at the same time as the wireless module 12b. As shown in FIG. 8, for example, 16.7msec after the wireless module 12a outputs the TBTT interrupt signal, the TBTT interrupt signal may be outputted from the wireless module 12b.

The wireless module 12a and the wireless module 12b may not only have an operation mode for outputting the TBTT interrupt signal. (tentatively referred to as a "local game mode"), as described in the present invention, but also have a function of operating in an infrastructure mode or an ad hoc mode, which are operation modes of a general wireless communication module (the TBTT interrupt signal is not outputted in the infrastructure mode or the ad hoc mode). In this case, each of the wireless module 12a and the wireless module 12b switches the aforementioned operation modes between each other based on an instruction outputted from each of the game processing section 14a and the game processing section 14b.

Note that the infrastructure mode or the ad hoc mode are terms used in the wireless LAN standard IEEE802.11, and therefore the descriptions thereof will be omitted. The aforementioned local game mode is a mode in which the ad hoc mode is customized to be used for a communication game.

Furthermore, the present embodiment illustrates an example where the interrupt circuit 16a outputs the TBTT interrupt signal to the game processing section 14a, thereby causing the game processing section 14a to execute the adjustment process of adjusting the V counter 181a. However, by additionally providing an adjustment circuit, the interrupt circuit 16a may output the TBTT interrupt signal to the adjustment circuit, thereby causing the adjustment circuit to execute the adjustment process of adjusting the V counter 181a. The adjustment circuit may be provided inside or outside the wireless module 12a. Alternatively, the interrupt circuit 16a may be provided inside the wireless module 12a. Still alternatively, the interrupt circuit 16a may output the TBTT interrupt signal to the processor 123a of the wireless module 12a, thereby causing the processor 123a to execute the adjustment process of adjusting the V counter 181a.

Furthermore, the game processing section 14a and/or the display section 18a may execute a predetermined process in a cycle of 16.7mesc based on the TSF timer 124a (by reading the TSF timer 124a or in response to an interrupt request outputted based on the TSF timer value) (in this case, the clock 20a or the V counter 181a are not necessary).

Still furthermore, each of the game processing section 14a and the display section 18a may not execute a process in a predetermined cycle. Specifically, in the case where a time at which the game processing section 14a of the first game apparatus 10a executes the process needs to coincide with a time at which the game processing section 14b of the second game apparatus 10b executes the process, and/or in the case where a time at which the display section 18a of the first game apparatus 10a executes the process needs to coincide with a time at which the display section 18b of the second game apparatus 10b executes the process, it can be achieved by causing each of the game apparatuses 10a and 10b to determine, based on its own TSF timer value (or based on its own V counter value adjusted in accordance with the TSF timer value), the time at which each of the game processing section 14a or 14b executes the process and/or the time at which each of the display section 18a or 18b executes the process.

Still furthermore, the present embodiment illustrates an example where one flame buffer 26a is provided. However, the present invention is applicable as a game apparatus in which a plurality of flame buffers 26a are provided and the plurality of flame buffers 26a are used by switching therebetween so as to be synchronized to the cycle in which the display section 18a updates the display screen. In this case, the game processing section 14a switches a flame buffer used by the display section 18a (a flame buffer which stores the image data to be outputted to the screen of the display section 18a) from one to another during the Vblankperiod (specifically, when step S48 or the like is executed) . In this case, not even during the V blank period, the game processing section 14a writes the image data into the flame buffer 26a not currently used by the display section 18a, thereby making it possible to update the game image.

Although the present embodiment illustrates an example where the V counter 181a (the V counter 181b) is adjusted based on the TBTT interrupt signal outputted from the wireless module 12a (the wireless module 12b), the present invention is not limited thereto. The V counter 181a (the V counter 181b) may be adjusted without using an interrupt signal outputted from the wireless module 12a (the wireless module 12b). Hereinafter, an example where the V counter is adjusted by polling without using the interrupt signal will be described as a second embodiment.

### (second embodiment)

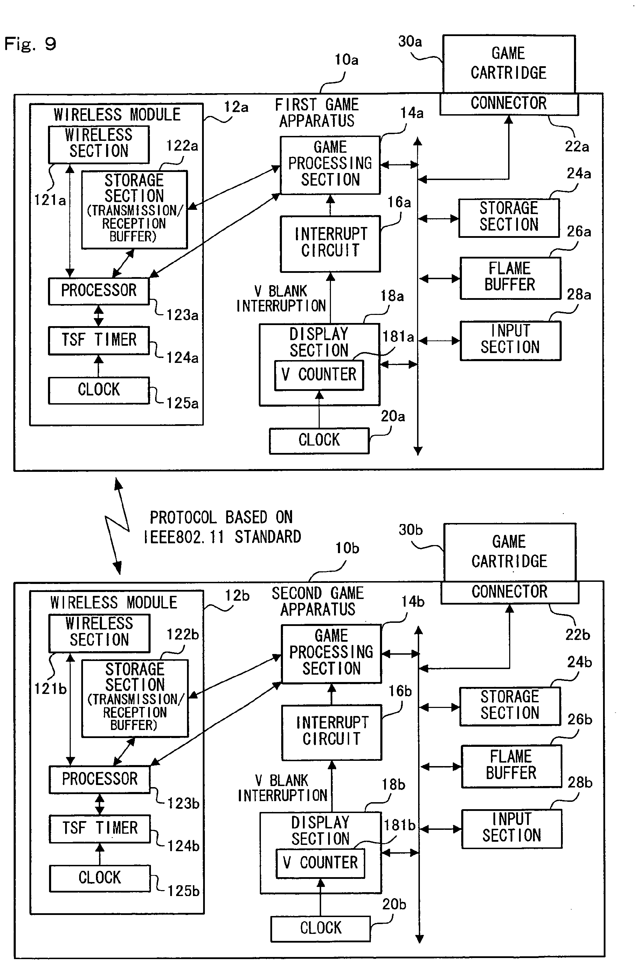

FIG. 9 is a block diagram illustrating the configuration of the game system according to the second embodiment of the present invention. The configuration shown in FIG. 9 is similar to that shown in FIG. 1 except that the TBTT interrupt signals are not outputted from the processors 123a and 123b to the interrupt circuits 16a and 16b, respectively, and therefore a detailed description thereof as shown in FIG. 9 will be omitted.

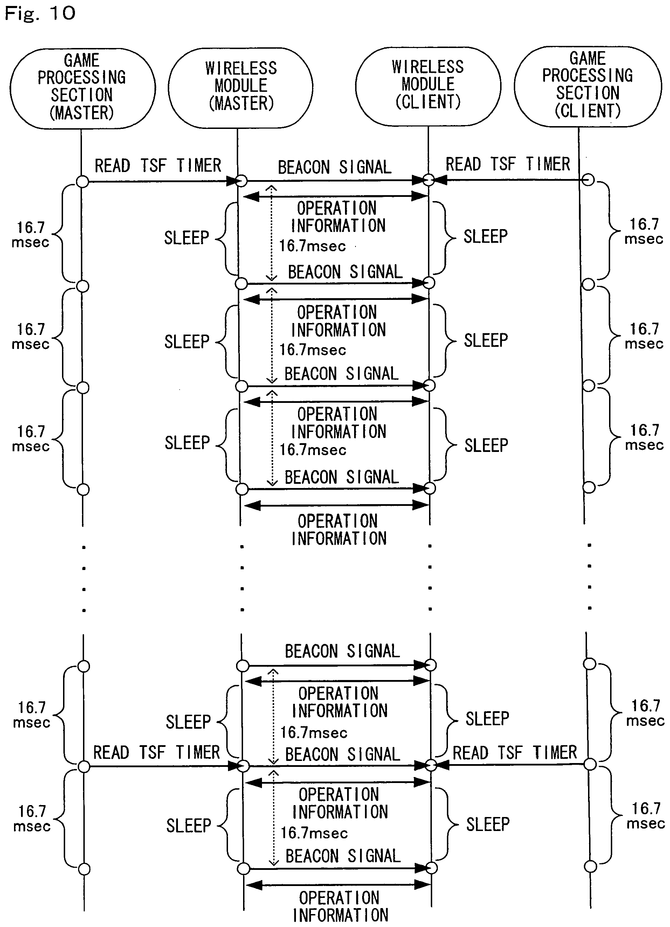

According to the second embodiment, as shown in FIG. 10, the game processing section 14a obtains the value of the TSF timer 124a (the TSF timer value) of the wireless module 12a on a regular basis in a cycle N times as long as 16.7msec, thereby adjusting the V counter 181a based on the TSF timer value thus obtained. The same is also true of the game processing section 14b.

Hereinafter, described will be the flows of the processes executed by the game processing section 14a, the game processing section 14b, the wireless module 12a and the wireless module 12b when executing the game in accordance with the game program loaded to the storage section 24a (the storage section 24b) from the game cartridge 30a (the game cartridge 30b).

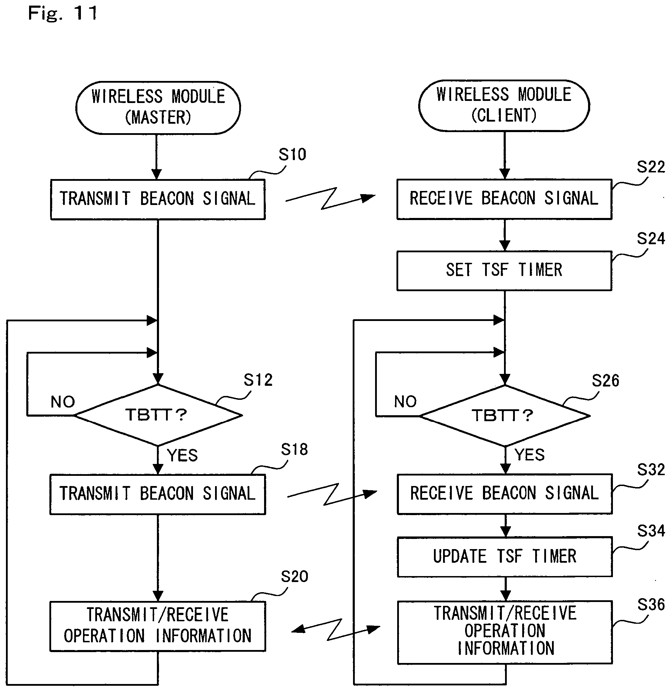

FIG. 11 is a flowchart illustrating the flow of the process executed by the wireless module 12a and the wireless module 12b will be described. Note that the process shown in FIG. 11 is similar to that shown in FIG. 4 except that a process which pertains to transmission of the TBTT interrupt signal (i.e., processes of steps S14, S16, S28 and S30 which are shown in FIG. 4) is deleted, and therefore a detailed description thereof as shown in FIG. 11 will be omitted.

Note that prior to step S10, the first game apparatus 10a acting as the master previously adjusts the value of the V counter 181a such that the TSF timer value becomes equal to a natural number multiple of the game processing cycle at the time of the V blank interruption (i.e., at a time when the value of the V counter 181a becomes "192" in the present embodiment) . The same is also true of the second game apparatus 10b acting as the client.

According to the second embodiment, the flow of the main process executed by the game processing section 14a and the game processing section 14b is the same as that in the first embodiment (see FIG. 5). Note that in the first embodiment, the transmission interval of the beacon signal is set N times as long as the game processing cycle. However, in the second embodiment where the TBTT interrupt signal is not used, the transmission interval of the beacon signal may be set freely.

Note that when the interrupt circuit 16a outputs an interrupt request signal, the game processing section 14a suspends the aforementioned main process so as to execute an interrupt process (the V blank interrupt process) in response to the interrupt request signal. The same is also true of the game processing section 14b.

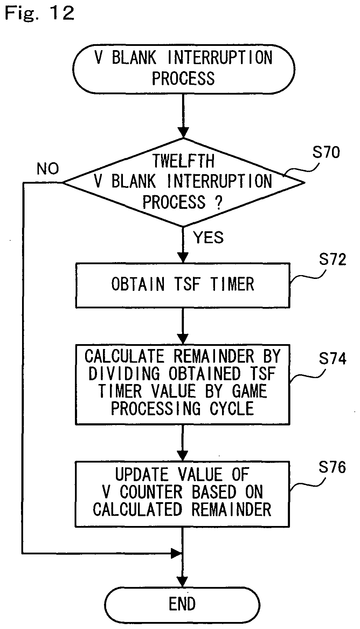

FIG. 12 is a flowchart illustrating a detail of the V blank interrupt process. In step S70, the game processing section 14a determines whether or not the currently executed V blank interrupt process is a twelfth V blank interrupt process counting from when the value of the V counter 181a is most recently updated. When it is determined that the currently executed V blank interrupt process is the twelfth V blank interrupt process, the process proceeds to step S72. On the other hand, when it is determined that the currently executed V blank interrupt process is not the twelfth V blank interrupt process, the V blank interrupt process is finished. In step S72, the game processing section 14a obtains the value of the TSF timer 124a obtained when the twelfth V blank interrupt process is executed as the TSF timer value. In step S74, the game processing section 14a calculates a remainder by dividing the TSF timer value (in msec) obtained in step S72 by 16.7msec which is the game processing cycle. In step S76, the game processing section 14a updates the value of the V counter 181a based on the remainder calculated in step S74.

Hereinafter, processes of steps S74 and S76 will be described in detail.

The game processing section 14a calculates a difference between the remainder calculated in step S74 and a predetermined ideal value ("0" in the present embodiment, for example), thereby increasing or decreasing the value of the V counter 181a based on the difference such that the remainder calculated in step S74 becomes close to the predetermined ideal value.

For example, the TSF timer value obtained in step S72 is 200.6msec, a remainder calculated in step S74 is 0.2msec from an expression 200.6msec=16.7msecx12+0.2msec. In the present embodiment, the V counter 181a counts from "0" to "262" during 16.7msec which is the game processing cycle. Therefore, from an expression 263×0.2msec÷16.7msec=3.1, 0.2msec corresponds to approximately three counts of the V counter 181a (three scanning lines). Thus, in step S76, the game processing section 14a subtracts "3" from the value of the V counter 181a.

Alternatively, for example, the TSF timer value obtained in step S72 is 249.8msec, a remainder calculated in step S72 is 16.0msec from an expression 249.8msec=16.7msec×14+16.0msec. From an expression 263×16.0msec÷16.7msec=252.0, 16.0mesc corresponds to approximately 252 counts of the V counter 181a (252 scanning lines) . This indicates that if the value of the V counter 181a counts up by "11"(=263-252), a remainder calculated in step S74 of the V blank interrupt process to be subsequently executed will be substantially "0". Thus, in step S76, the game processing section 14a adds "11" to the value of the V counter 181a.

When a value to be added/subtracted to/from the value of the V counter 181a is greater than a predetermined value ("4", for example), instead of adding/subtracting the value to/fromthe value of the V counter 181a, the value of the V counter 181a may be added/subtracted in a plurality of stages. On the other hand, when the value to be added/subtracted to/from the value of the V counter 181a is smaller than a predetermined value ("2", for example), a change in the value of the V counter 181a may be omitted.

By executing the aforementioned process, it becomes possible to cause a time at which the V blank period starts to coincide with a time at which the TSF timer 124a indicates a multiple of 16.7msec. Therefore, it is assured that the game processing section 14a executes the game processing in a cycle of 16.7msec based on the TSF timer 124a. Similarly, it is also assured that the game processing section 14b executes the game processing in a cycle of 16.7msec based on the TSF timer 124b. The TSF of each of the wireless modules assures that the TSF timer 124a and the TSF timer 124b are synchronized to each other. As a result, the game processing cycle of the game processing section 14a and the game processing cycle of the game processing section 14b are also synchronized to each other accordingly.

Although the present embodiment illustrates an example where the value of the V counter is adjusted such that the remainder calculated in step S74 shown in FIG. 12 becomes close to "0", the present invention is not limited thereto. The value of the V counter may be adjusted such that the remainder calculated in step S74 shown in FIG. 12 becomes close to a specified value other than "0".

Although the present embodiment illustrates an example where the value of the V counter is adjusted based on the TSF counter value obtained when the V blank period starts, the present invention is not limited thereto.

Furthermore, in an example shown in FIG. 10, the game processing section 14a of the first game apparatus 10a acting as the master reads the TSF timer value at the same time as the game processing section 14b of the second game apparatus 10b acting as the client. However, the game processing section 14a does not need to read the TSF timer value at the same time as the game processing section 14b. For example, 16.7msec after the game processing section 14a of the first game apparatus 10a reads the TSF timer 124a, the game processing section 14b of the second game apparatus 10b may read the TSF timer 124b.

Although the present embodiment illustrates an example where the value of the V counter 181a (the V counter 181b) is adjusted every twelve times the V blank interrupt signal is outputted, the present invention is not limited thereto. For example, the value of the V counter 181a (the V counter 181b) may be adjusted each time the V blank interrupt signal is outputted.

While the invention has been described in detail, the foregoing description is in all aspects illustrative and not restrictive. It is understood that numerous other modifications and variations can be devised without departing from the scope of the invention.

## Claims

1. A game apparatus (10a) which realizes a multiplayer gameplay using the game apparatus (10a) and at least one other game apparatus (10b) capable of performing wireless communication with each other, comprising:
a wireless communication section (12a), operating as a master, having a time synchronization function of transmitting a beacon signal in a constant cycle to synchronize a timer (124a) provided inside the wireless communication section (12a) to another timer (124b) provided inside another wireless communication section (12b), operating as a client, of the at least one other game apparatus (10b) which is set as a communication party for the multiplayer gameplay, the wireless communication section provided inside the game apparatus or connected to the game apparatus via a connector,
wherein the beacon signal is received by the wireless communication section of the at least one other game apparatus and includes information indicating a transmit time of the beacon signal and a beacon interval;
a counter (181a) for measuring a processing cycle of a game process executed in a cyclic manner;
a processing section (14a, 18a) for executing the game process in a cyclic manner based on the value of the counter; and
an adjustment section for adjusting the value of the counter based on a time at which the wireless communication section outputs an interrupt signal to the adjustment section, such that the processing cycle of the game process is synchronized with the transmission cycle of the beacon signal transmitted from the wireless communication section,
wherein the interrupt signal is outputted in a cycle N times as long as the beacon signal transmission cycle, N being a natural number greater than 1.

2. The game apparatus according to claim 1, wherein the adjustment section comprises an adjustment circuit adapted to receive the interrupt signal thereby causing the adjustment circuit to execute the adjustment process of adjusting the value of the counter.

3. The game apparatus according to claim 1, wherein the processing section (14a) is adapted to receive the interrupt signal to thereby temporarily suspend the game process for adjusting the value of the counter.

4. The game apparatus according to claim 1, wherein
the adjustment section adjusts the value of the counter, based on a time at which the wireless communication section transmits the beacon signal, such that the execution of the game process is synchronized with the transmission of the beacon signal from the wireless communication section.

5. The game apparatus according to claim 1, wherein
the adjustment section adjusts the value of the counter such that when the value of the timer indicates a first value, the value of the counter indicates a second value.

6. The game apparatus according to claim 1, wherein the processing section executes a process of generating image data and storing the image data in a display buffer (26a), and
the game apparatus further includes an output section (18a) for outputting the image data stored in the display buffer to a display section, and
the adjustment section adjusts the value of the counter at which the output section outputs the image data to the display section based on the value of the timer of the wireless communication section of the game apparatus.

7. The game apparatus according to claim 1, wherein the processing section executes a process of generating image data and storing the image data in a display buffer (26a), and
the game apparatus further includes an output section (18a) for outputting the image data stored in the display buffer, and
the adjustment section adjusts the value of the counter at which the processing section updates the image data stored in the display buffer based on the value of the timer of the wireless communication section of the game apparatus.

8. The game apparatus according to claim 1, wherein
the processing section executes a process of generating image data and storing the image data in either of at least two display buffers, and
the game apparatus further includes an output section for outputting the image data stored in either of the at least two display buffers to a display section, and
the adjustment section adjusts the value of the counter at which the at least two display buffers used by the output section are switched between each other based on the value of the timer of the wireless communication section of the game apparatus.

9. The game apparatus according to claim 1, wherein
the processing section repeatedly executes game processing of one unit, which processing defines a predetermined procedure, and
the adjustment section adjusts the value of the counter at which the processing section executes the game processing of one unit based on the value of the timer of the wireless communication section of the game apparatus.

10. The game apparatus according to claim 1, further comprising an input section operated by a player, wherein
the processing section executes the game process based on operation information inputted to the input section, and
the adjustment section adjusts the value of the counter at which the game process, which is executed by the processing section based on the operation information, is executed based on the value of the timer of the wireless communication section of the game apparatus.

11. The game apparatus according to claim 10, wherein
the wireless communication section determines a time at which the operation information is exchanged with the at least one other game apparatus based on the value of the timer.

12. The game apparatus according to claim 1, wherein
the wireless communication section includes interrupt signal outputting means of outputting the interrupt signal in a constant cycle based on the value of the timer.

13. The game apparatus according to claim 12, wherein
the interrupt signal outputting means outputs the interrupt signal in the predetermined cycle based on the value of the timer, and
the adjustment section adjusts the value of the counter such that the value of the counter obtained when the wireless communication section outputs the interrupt signal becomes close to a predetermined fixed value.

14. The game apparatus according to claim 13, wherein
the wireless communication section includes beacon interval setting means of setting a cycle of the beacon signal transmitted from the wireless communication section to a constant cycle, and
the interrupt signal outputting means outputs the interrupt signal when a transmission time of the beacon signal arrives.

15. The game apparatus according to claim 1, wherein
the processing section repeatedly executes the game process based on data necessary for game processing, which is received from the said another wireless communication section in a constant cycle, and
includes beacon interval setting means of setting a cycle of the beacon signal transmitted by the wireless communication section to the constant cycle, and
the wireless communication section transmits the beacon signal in a constant cycle based on the value of the timer, and transmits or receives the data necessary for the game processing to or from the said another wireless communication section each time the wireless communication section transmits the beacon signal to the said another wireless communication section, and
the adjustment section adjusts the value of the counter at which the processing section executes the game process based on a transmission time of the beacon signal, which is obtained based on the value of the timer of the wireless communication section of the game apparatus.

16. The game apparatus according to claim 15, further comprising an input section operated by a player, wherein
the processing section repeatedly executes the game process based on operation information inputted to an input section of the game apparatus and the operation information inputted to another input section of the at least one other game apparatus, and
the wireless communication section exchanges the operation information with the at least one other game apparatus each time the wireless communication section transmits the beacon signal to the said another wireless communication section.

17. The game apparatus according to claim 15, wherein
the wireless communication section further includes interrupt signal outputting means of outputting the interrupt signal based on the value of the timer, when the transmission time of the beacon signal arrives, and
the adjustment section adjusts or determines the value of the counter at which the game process is executed based on a time at which the wireless communication section outputs the interrupt signal.

18. The game apparatus according to claim 17, wherein
the wireless communication section transmits or receives the data necessary for the game processing to or from the said another wireless communication section after transmitting the beacon signal to the said another wireless communication section, and further includes a sleep function of operating in a sleep mode until the transmission time of the beacon signal subsequently arrives after transmitting or receiving the data necessary for the game processing to or from the said another wireless communication section.

19. The game apparatus according to claim 1, wherein
the processing section reads the value of the timer of the wireless communication section in a constant cycle and adjusts the value of the counter at which the processing section executes the game process based on the read value.

20. The game apparatus according to claim 19, wherein
the processing section repeatedly executes game processing of one unit, which processing defines a predetermined procedure, and reads the value of the timer of the wireless communication section in a cycle N times (N is a natural number greater than 1) as long as the game processing of one unit.

21. The game apparatus according to claim 1, wherein
the wireless communication section synchronizes the timer provided inside the wireless communication section to the said another timer provided inside the said another wireless communication section of the at least one other game apparatus based on an IEEE 802.11 standard.

22. A game system which realizes a multiplayer gameplay using a plurality of game apparatuses including at least a first game apparatus (10a) and a second game apparatus (10b), all of which are capable of performing wireless communication with each other as communication parties for the multiplayer gameplay,
the first game apparatus (10a) including:
a first wireless communication section (12a), operating as a master, inside the first game apparatus (10a) or connected via a connector and having a time synchronization function of transmitting a beacon signal in a constant cycle to synchronize a timer (124a) provided inside the first wireless communication section (12a) to another timer (124b) provided inside a second wireless communication section (12b), operating as a client, of the second game apparatus;
wherein the beacon signal is received by the wireless communication section of the second game apparatus and includes information indicating a transmit time of the beacon signal and a beacon interval;
a first counter (181a) for measuring a processing cycle of a game process executed in a cyclic manner;
a first processing section (14a, 18a) for executing the game process in a cyclic manner based on the value of the first counter; and
a first adjustment section for adjusting the value of the first counter of the first game apparatus based on a time at which the wireless communication section outputs an interrupt signal to the adjustment section, such that the processing cycle of the game process is synchronized with the transmission cycle of the beacon signal transmitted from the wireless communication section,
wherein the interrupt signal is outputted in a cycle N times as long as the beacon signal transmission cycle, N being a natural number greater than 1; and
the second game apparatus (10b) including:
the second wireless communication section inside the second game apparatus (10b) or connected via a connector and having the time synchronization function of synchronizing the said another timer provided inside the second wireless communication section to the timer provided inside the first wireless communication section of the first game apparatus;
a second counter (181b) for measuring a processing cycle of a game process in a cyclic manner;
a second processing section (14b, 18b) for executing the game process in a cyclic manner based on the value of the second counter; and
a second adjustment section for adjusting the value of the second counter of the second game apparatus based on a time at which the wireless communication section performs communication, such that the execution of the game process is synchronized with the transmission cycle of the beacon signal transmitted from the wireless communication section.

23. A game method for realizing a multiplayer gameplay using a game apparatus (10a) and at least one other game apparatus (10b) capable of performing wireless communication with each other, the method comprising the steps of:
synchronizing a timer (124a) provided inside a wireless communication section (12a), operating as a master, of the game apparatus, by transmitting a beacon signal in a constant cycle, to another timer (124b) provided inside another wireless communication section (12b), operating as a client, of the at least one other game apparatus (10b) which is set as a communication party for the multiplayer gameplay, the wireless communication section provided inside the game apparatus or connected to the game apparatus via a connector,
wherein the beacon signal is received by the wireless communication section of the at least one other game apparatus and includes information indicating a transmit time of the beacon signal and a beacon interval;
measuring a processing cycle of a game process executed in a cyclic manner using a counter (181a);
executing, in a processing section (14a, 18a) the game process in a cyclic manner based on the value of the counter; and
adjusting the value of the counter of the game apparatus based on a time at which the wireless communication section outputs an interrupt signal to the adjustment section, such that the processing cycle of the game process is synchronized with the transmission cycle of the beacon signal transmitted from the wireless communication section,
wherein the interrupt signal is outputted in a cycle N times as long as the beacon signal transmission cycle, N being a natural number greater than 1.

## Patentansprüche

1. Spielvorrichtung (10a), die ein Mehrspieler-Spiel unter Verwendung der Spielvorrichtung (10a) und mindestens einer anderen Spielvorrichtung (10b) realisiert, die in der Lage sind, drahtlose Kommunikation miteinander durchzuführen, enthaltend:
einen Drahtlos-Kommunikationsabschnitt (12a), der als ein Master arbeitet und eine Zeitsynchronisationsfunktion aufweist zum Übertragen eines Bakensignals in einem konstanten Zyklus, um einen Zeitgeber (124a) innerhalb des Drahtlos-Kommunikationsabschnitts (12a) mit einem anderen Zeitgeber (124b) zu synchronisieren, der innerhalb eines anderen, als ein Client arbeitenden Drahtlos-Kommunikationsabschnitts (12b) vorgesehen ist, in der mindestens einen anderen Spielvorrichtung (10b), die als ein Kommunikationsteilnehmer für das Mehrspieler-Spiel eingestellt ist, wobei der Drahtlos-Kommunikationsabschnitt innerhalb der Spielvorrichtung vorgesehen oder mit der Spielvorrichtung über einen Verbinder verbunden ist,
wobei das Bakensignal durch den Drahtlos-Kommunikationsabschnitt der mindestens einen anderen Spielvorrichtung empfangen wird und Informationen enthält, die eine Übertragungszeit des Bakensignals und ein Bakenintervall angeben;
einen Zähler (181a) zum Messen eines Verarbeitungszyklus eines Spielprozesses, der zyklisch ausgeführt wird;
einen Verarbeitungsabschnitt (14a, 18a) zum Ausführen des Spielprozesses in einer zyklischen Weise basierend auf dem Wert des Zählers; und
einen Abgleichabschnitt zum Abgleichen des Wertes des Zählers basierend auf einer Zeit, zu der der Drahtlos-Kommunikationsabschnitt ein Unterbrechungssignal an den Abgleichabschnitt ausgibt, so dass der Verarbeitungszyklus des Spielprozesses synchronisiert ist mit dem Übertragungszyklus des Bakensignals, das vom Drahtlos-Kommunikationsabschnitt übertragen ist,
wobei das Unterbrechungssignal in einem Zyklus ausgegeben wird, der N-mal so lang ist wie der Übertragungszyklus des Bakensignals, wobei N eine natürliche Zahl größer als 1 ist.

2. Spielvorrichtung nach Anspruch 1, wobei der Abgleichabschnitt eine Abgleichschaltung umfasst, die so ausgelegt ist, dass sie das Unterbrechungssignal empfängt, wodurch die Abgleichschaltung veranlasst wird, den Abgleichvorgang zum Abgleichen des Wertes des Zählers auszuführen.

3. Spielvorrichtung nach Anspruch 1, wobei der Verarbeitungsabschnitt (14a) dazu eingerichtet ist, das Unterbrechungssignal zu empfangen, um dadurch den Spielvorgang zum Abgleichen des Wertes des Zählers vorübergehend zu unterbrechen.

4. Spielvorrichtung nach Anspruch 1, wobei
der Abgleichabschnitt den Wert des Zählers abgleicht basierend auf einem Zeitpunkt, zu dem der Drahtlos-Kommunikationsabschnitt das Bakensignal überträgt, so dass die Ausführung des Spielprozesses mit der Übertragung des Bakensignals vom Drahtlos-Kommunikationsabschnitt synchronisiert ist.

5. Spielvorrichtung nach Anspruch 1, wobei
der Abgleichabschnitt den Wert des Zählers so abgleicht, dass, wenn der Wert des Zeitgebers einen ersten Wert anzeigt, der Wert des Zählers einen zweiten Wert anzeigt.

6. Spielvorrichtung nach Anspruch 1, wobei der Verarbeitungsabschnitt einen Prozess zum Erzeugen von Bilddaten und Speichern der Bilddaten in einem Anzeigepuffer (26a) ausführt, und
die Spielvorrichtung ferner einen Ausgabeabschnitt (18a) zum Ausgeben der in dem Anzeigepuffer gespeicherten Bilddaten an einen Anzeigeabschnitt enthält, und
der Abgleichabschnitt den Wert des Zählers abgleicht, bei dem der Ausgabeabschnitt die Bilddaten an den Anzeigeabschnitt ausgibt, basierend auf dem Wert des Zeitgebers des Drahtlos-Kommunikationsabschnitts der Spielvorrichtung.

7. Spielvorrichtung nach Anspruch 1, wobei der Verarbeitungsabschnitt einen Prozess zum Erzeugen von Bilddaten und Speichern der Bilddaten in einem Anzeigepuffer (26a) ausführt, und
die Spielvorrichtung weiterhin einen Ausgabeabschnitt (18a) zum Ausgeben der im Anzeigepuffer gespeicherten Bilddaten enthält, und
der Abgleichabschnitt den Wert des Zählers abgleicht, bei dem der Verarbeitungsabschnitt die im Anzeigepuffer gespeicherten Bilddaten aktualisiert, basierend auf dem Wert des Zeitgebers des Drahtlos-Kommunikationsabschnitts der Spielvorrichtung.

8. Spielvorrichtung nach Anspruch 1, wobei
der Verarbeitungsabschnitt einen Prozess zum Erzeugen von Bilddaten und Speichern der Bilddaten in einem von mindestens zwei Anzeigepuffern ausführt, und
die Spielvorrichtung weiterhin einen Ausgabeabschnitt zum Ausgeben der in einem der mindestens zwei Anzeigepuffer gespeicherten Bilddaten an einen Anzeigeabschnitt enthält, und
der Abgleichabschnitt den Wert des Zählers abgleicht, bei dem die mindestens zwei vom Ausgabeabschnitt verwendeten Anzeigepuffer untereinander umgeschaltet werden, basierend auf dem Wert des Zeitgebers des Drahtlos-Kommunikationsabschnitts des Spielvorrichtung.

9. Spielvorrichtung nach Anspruch 1, wobei
der Verarbeitungsabschnitt die Spielverarbeitung einer Einheit wiederholt ausführt, wobei die Verarbeitung einen vorgegebenen Ablauf definiert, und
der Abgleichabschnitt den Wert des Zählers abgleicht, bei dem der Verarbeitungsabschnitt die Spielverarbeitung einer Einheit ausführt, basierend auf dem Wert des Zeitgebers des Drahtlos-Kommunikationsabschnitts der Spielvorrichtung.

10. Spielvorrichtung nach Anspruch 1, ferner enthaltend einen Eingabeabschnitt, der von einem Spieler bedient wird, wobei
der Verarbeitungsabschnitt den Spielprozess auf der Grundlage von Bedieninformationen ausführt, die in den Eingabeabschnitt eingegeben werden, und
der Abgleichabschnitt den Wert des Zählers abgleicht, bei dem der Spielprozess von dem Verarbeitungsabschnitt ausgeführt wird, basierend auf den Bedieninformationen, basierend auf dem Wert des Zeitgebers des Drahtlos-Kommunikationsabschnitts der Spielvorrichtung.

11. Spielvorrichtung nach Anspruch 10, wobei
der Drahtlos-Kommunikationsabschnitt einen Zeitpunkt bestimmt, zu dem die Bedieninformationen mit der mindestens einen anderen Spielvorrichtung ausgetauscht werden, basierend auf dem Wert des Zeitgebers.

12. Spielvorrichtung nach Anspruch 1, wobei
der Drahtlos-Kommunikationsabschnitt ein Unterbrechungssignal-Ausgabemittel enthält zum Ausgeben des Unterbrechungssignals in einem konstanten Zyklus, basierend auf dem Wert des Zeitgebers.

13. Spielvorrichtung nach Anspruch 12, wobei
das Unterbrechungssignal-Ausgabemittel das Unterbrechungssignal in dem vorbestimmten Zyklus ausgibt basierend auf dem Wert des Zeitgebers, und
der Abgleichabschnitt den Wert des Zählers so abgleicht, dass der Wert des Zählers, der erhalten wird, wenn der Drahtlos-Kommunikationsabschnitt das Unterbrechungssignal ausgibt, einem vorbestimmten festen Wert nahekommt.

14. Spielvorrichtung nach Anspruch 13, wobei
der Drahtlos-Kommunikationsabschnitt ein Bakenintervall-Einstellmittel enthält zum Einstellen eines Zyklus des vom Drahtlos-Kommunikationsabschnitt übertragenen Bakensignals auf einen konstanten Zyklus, und
das Unterbrechungssignal-Ausgabemittel das Unterbrechungssignal aus gibt, wenn eine Übertragungszeit des Bakensignals eintritt.

15. Spielvorrichtung nach Anspruch 1, wobei
der Verarbeitungsabschnitt wiederholt den Spielprozess ausführt auf der Grundlage von Daten, die für die Spielverarbeitung erforderlich sind und die von dem anderen Drahtlos-Kommunikationsabschnitt in einem konstanten Zyklus empfangen werden, und
ein Bakenintervall-Einstellmittel enthält zum Einstellen eines Zyklus des von dem Drahtlos-Kommunikationsabschnitt übertragenen Bakensignals auf den konstanten Zyklus, und
der Drahtlos-Kommunikationsabschnitt das Bakensignal in einem konstanten Zyklus überträgt basierend auf dem Wert des Zeitgebers und die für die Spielverarbeitung notwendigen Daten zu oder von dem genannten anderen Drahtlos-Kommunikationsabschnitt überträgt oder empfängt, jedes Mal, wenn der Drahtlos-Kommunikationsabschnitt das Bakensignal an den anderen Drahtlos-Kommunikationsabschnitt überträgt, und
der Abgleichabschnitt den Wert des Zählers abgleicht, bei dem der Verarbeitungsabschnitt den Spielprozess ausführt, basierend auf einer Übertragungszeit des Bakensignals, die erhalten wird basierend auf dem Wert des Zeitgebers des Drahtlos-Kommunikationsabschnitts der Spielvorrichtung.

16. Spielvorrichtung nach Anspruch 15, ferner enthaltend einen Eingabeabschnitt, der von einem Spieler bedient wird, wobei
der Verarbeitungsabschnitt wiederholt den Spielprozess ausführt, basierend auf Bedieninformationen, die in einen Eingabeabschnitt der Spielvorrichtung eingegeben werden, und den Bedieninformationen, die in einen anderen Eingabeabschnitt der mindestens einen anderen Spielvorrichtung eingegeben werden, und
der Drahtlos-Kommunikationsabschnitt die Bedieninformationen mit der mindestens einen anderen Spielvorrichtung jedes Mal austauscht, wenn der Drahtlos-Kommunikationsabschnitt das Bakensignal an den besagten anderen Drahtlos-Kommunikationsabschnitt überträgt.

17. Spielvorrichtung nach Anspruch 15, wobei
der Drahtlos-Kommunikationsabschnitt ferner ein Unterbrechungssignal-Ausgabemittel zum Ausgeben des Unterbrechungssignals basierend auf dem Wert des Zeitgebers enthält, wenn die Übertragungszeit des Bakensignals eintritt, und
der Abgleichabschnitt den Wert des Zählers abgleicht oder bestimmt, zu dem der Spielprozess ausgeführt wird, basierend auf einem Zeitpunkt, zu dem der Drahtlos-Kommunikationsabschnitt das Unterbrechungssignal ausgibt.

18. Spielvorrichtung nach Anspruch 17, wobei
der Drahtlos-Kommunikationsabschnitt die für die Spielverarbeitung notwendigen Daten zu oder von dem genannten anderen Drahtlos-Kommunikationsabschnitt überträgt oder empfängt, nachdem das Bakensignal zu dem anderen Drahtlos-Kommunikationsabschnitt übertragen wurde, und ferner enthält eine Schlaffunktion zum Betrieb in einem Schlafmodus, bis der Übertragungszeitpunkt des Bakensignals eintritt nach dem Übertragen oder Empfangen der für die Spielverarbeitung notwendigen Daten zu oder von dem genannten anderen Drahtlos-Kommunikationsabschnitt.

19. Spielvorrichtung nach Anspruch 1, wobei
der Verarbeitungsabschnitt den Wert des Zeitgebers des Drahtlos-Kommunikationsabschnitts in einem konstanten Zyklus liest und den Wert des Zählers abgleicht, bei dem der Verarbeitungsabschnitt den Spielprozess ausführt, basierend auf dem gelesenen Wert.

20. Spielvorrichtung nach Anspruch 19, wobei
der Verarbeitungsabschnitt die Spielverarbeitung einer Einheit wiederholt ausführt, wobei die Verarbeitung eine vorbestimmte Prozedur definiert, und den Wert des Zeitgebers des Drahtlos-Kommunikationsabschnitts in einem Zyklus N-mal (N ist eine natürliche Zahl größer als 1) liest, solange wie die Spielverarbeitung einer Einheit.

21. Spielvorrichtung nach Anspruch 1, wobei
der Drahtlos-Kommunikationsabschnitt den innerhalb des Drahtlos-Kommunikationsabschnitts enthaltenen Zeitgeber mit dem innerhalb des anderen Drahtlos-Kommunikationsabschnitts der mindestens einen anderen Spielvorrichtung enthaltenen anderen Zeitgeber synchronisiert basierend auf einem IEEE 802.11-Standard.

22. Spielsystem, das ein Mehrspieler-Spiel realisiert, das eine Vielzahl von Spielvorrichtungen verwendet, die mindestens eine erste Spielvorrichtung (10a) und eine zweite Spielvorrichtung (10b) umfassen, die alle in der Lage sind, drahtlose Kommunikation miteinander als Kommunikationsteilnehmer für das Mehrspieler-Spiel durchzuführen,
wobei die erste Spielvorrichtung (10a) enthält:
einen ersten, als ein Master arbeitenden Drahtlos-Kommunikationsabschnitt (12a) innerhalb der ersten Spielvorrichtung (10a) oder damit über einen Verbinder verbunden, mit einer Zeitsynchronisationsfunktion zum Übertragen eines Bakensignals in einem konstanten Zyklus, um einen Zeitgeber (124a), der innerhalb des ersten Drahtlos-Kommunikationsabschnitts (12a) vorgesehen ist, mit einem anderen Zeitgeber (124b) zu synchronisieren, der innerhalb eines zweiten, als ein Client arbeitenden Drahtlos-Kommunikationsabschnitts (12b) in der zweiten Spielvorrichtung vorgesehen ist;
wobei das Bakensignal durch den Drahtlos-Kommunikationsabschnitt der zweiten Spielvorrichtung empfangen wird und Informationen enthält, die eine Übertragungszeit des Bakensignals und ein Bakenintervall angeben;
einen ersten Zähler (181a) zum Messen eines Verarbeitungszyklus eines Spielprozesses, der zyklisch ausgeführt wird;
einen ersten Verarbeitungsabschnitt (14a, 18a) zum Ausführen des Spielprozesses in einer zyklischen Weise basierend auf dem Wert des ersten Zählers; und
einen ersten Abgleichabschnitt zum Abgleichen des Wertes des ersten Zählers der ersten Spielvorrichtung basierend auf einer Zeit, zu der der Drahtlos-Kommunikationsabschnitt ein Unterbrechungssignal an den Abgleichabschnitt ausgibt, so dass der Verarbeitungszyklus des Spielprozesses synchronisiert ist mit dem Übertragungszyklus des Bakensignals, das vom Drahtlos-Kommunikationsabschnitt übertragen ist,
wobei das Unterbrechungssignal in einem Zyklus ausgegeben wird, der N-mal so lang ist wie der Übertragungszyklus des Bakensignals, wobei N eine natürliche Zahl größer als 1 ist; und
wobei die zweite Spielvorrichtung (10b) enthält:
den zweiten Drahtlos-Kommunikationsabschnitt innerhalb der zweiten Spielvorrichtung (10b) oder damit über einen Verbinder verbunden und enthaltend die Zeitsynchronisationsfunktion, um den besagten anderen Zeitgeber, der innerhalb des zweiten Drahtlos-Kommunikationsabschnitts vorgesehen ist, mit dem Zeitgeber zu synchronisieren, der innerhalb des ersten Drahtlos-Kommunikationsabschnitts der ersten Spielvorrichtung vorgesehen ist;
einen zweiten Zähler (181b) zum Messen eines Verarbeitungszyklus eines Spielprozesses, der zyklisch ausgeführt wird;
einen zweiten Verarbeitungsabschnitt (14b, 18b) zum Ausführen des Spielprozesses in einer zyklischen Weise basierend auf dem Wert des zweiten Zählers; und
einen zweiten Abgleichabschnitt zum Abgleichen des Wertes des zweiten Zählers der zweiten Spielvorrichtung basierend auf einer Zeit, zu der der Drahtlos-Kommunikationsabschnitt eine Kommunikation durchführt, so dass die Ausführung des Spielprozesses synchronisiert ist mit dem Übertragungszyklus des Bakensignals, das vom Drahtlos-Kommunikationsabschnitt übertragen ist.

23. Spielverfahren zum Realisieren eines Mehrspieler-Spiels unter Verwendung einer Spielvorrichtung (10a) und mindestens einer anderen Spielvorrichtung (10b), die in der Lage sind, drahtlose Kommunikation miteinander durchzuführen, wobei das Verfahren die folgenden Schritte enthält:
Synchronisieren eines Zeitgebers (124a) innerhalb eines als Master arbeitenden Drahtlos-Kommunikationsabschnitts (12a) in der Spielvorrichtung, durch Übertragen eines Bakensignals in einem konstanten Zyklus zu einem anderen Zeitgeber (124b), der innerhalb eines anderen als Client arbeitenden Drahtlos-Kommunikationsabschnitts (12b) vorgesehen ist in der mindestens einen anderen Spielvorrichtung (10b), die als ein Kommunikationsteilnehmer für das Mehrspieler-Spiel eingestellt ist, wobei der Drahtlos-Kommunikationsabschnitt innerhalb der Spielvorrichtung vorgesehen oder mit der Spielvorrichtung über einen Verbinder verbunden ist,
wobei das Bakensignal durch den Drahtlos-Kommunikationsabschnitt der mindestens einen anderen Spielvorrichtung empfangen wird und Informationen enthält, die eine Übertragungszeit des Bakensignals und ein Bakenintervall angeben;
Messen eines Verarbeitungszyklus eines Spielprozesses, der zyklisch ausgeführt wird, unter Verwendung eines Zählers (181a);
Ausführen des Spielprozesses in einem Verarbeitungsabschnitt (14a, 18a) in einer zyklischen Weise basierend auf dem Wert des Zählers; und
Abgleichen des Wertes des Zählers der Spielvorrichtung basierend auf einer Zeit, zu der der Drahtlos-Kommunikationsabschnitt ein Unterbrechungssignal an den Abgleichabschnitt ausgibt, so dass der Verarbeitungszyklus des Spielprozesses mit dem Übertragungszyklus des Bakensignals synchronisiert ist, das vom Drahtlos-Kommunikationsabschnitt übertragen ist,
wobei das Unterbrechungssignal in einem Zyklus ausgegeben wird, der N-mal so lang ist wie der Übertragungszyklus des Bakensignals, wobei N eine natürliche Zahl größer als 1 ist.

## Revendications

1. Un appareil de jeu (10a) qui assure une partie de jeu multijoueur par utilisation de l'appareil de jeu (10a) et d'au moins un autre appareil de jeu (10b), capables de mettre en œuvre une communication sans fil entre eux, comprenant :
une section de communication sans fil (12a), faisant fonction d'un maître, possédant une fonction de synchronisation temporelle pour la transmission d'un signal de balise dans un cycle constant, pour synchroniser un cadenceur (124a) situé à l'intérieur de la section de communication sans fil (12a), vers un autre cadenceur (124b) situé à l'intérieur d'une autre section de communication sans fil (12b), faisant fonction d'un client, de l'au moins un autre appareil de jeu (10b) qui est déterminé comme étant un partenaire en communication pour la partie de jeu multijoueur, la section de communication sans fil étant située à l'intérieur de l'appareil de jeu ou connectée à l'appareil de jeu via un connecteur,
dans lequel le signal de balise est reçu par la section de communication sans fil de l'au moins un autre appareil de jeu et comprend une information indiquant un temps de transmission du signal de balise et un intervalle de balise ;
un compteur (181a) pour la mesure d'un cycle de traitement d'un processus de jeu exécuté d'une manière cyclique ;
une section de traitement (14a, 18a) pour l'exécution du processus de jeu d'une manière cyclique sur la base de la valeur du compteur ; et
une section d'ajustement pour l'ajustement de la valeur du compteur sur la base d'un temps auquel la section de communication sans fil délivre un signal d'interruption à la section d'ajustement, de telle sorte que le cycle de traitement du processus de jeu soit synchronisé avec le cycle de transmission du signal de balise transmis depuis la section de communication sans fil,
dans lequel le signal d'interruption est délivré dans un cycle N fois long comme le cycle de transmission du signal de balise, N étant un entier naturel supérieur à 1.

2. L'appareil de jeu selon la revendication 1, dans lequel la section d'ajustement comprend un circuit d'ajustement apte à recevoir le signal d'interruption, faisant en sorte que le circuit d'ajustement exécute ainsi le processus d'ajustement pour ajuster la valeur du compteur.

3. L'appareil de jeu selon la revendication 1, dans lequel la section de traitement (14a) est apte à recevoir le signal d'interruption pour ainsi suspendre temporairement le processus de jeu pour ajuster la valeur du compteur.

4. L'appareil de jeu selon la revendication 1, dans lequel
la section d'ajustement ajuste la valeur du compteur sur la base d'un temps auquel la section de communication sans fil transmet le signal de balise, de telle sorte que l'exécution du processus de jeu soit synchronisée avec la transmission du signal de balise à partir de la section de communication sans fil.

5. L'appareil de jeu selon la revendication 1, dans lequel
la section d'ajustement ajuste la valeur du compteur de telle sorte que lorsque la valeur du cadenceur indique une première valeur, la valeur du compteur indique une seconde valeur.

6. L'appareil de jeu selon la revendication 1, dans lequel la section de traitement exécute un processus de génération de données d'image et de stockage des données d'image dans un tampon d'affichage (26a), et
l'appareil de jeu comprend en outre une section de sortie (18a) pour délivrer à une section d'affichage les données d'image stockées dans le tampon d'affichage, et
la section d'ajustement ajuste la valeur du compteur, à laquelle la section de sortie délivre les données d'image à la section d'affichage, sur la base de la valeur du cadenceur de la section de communication sans fil de l'appareil de jeu.

7. L'appareil de jeu selon la revendication 1, dans lequel la section de traitement exécute un processus de génération de données d'image et de stockage des données d'image dans un tampon d'affichage (26a), et
l'appareil de jeu comprend en outre une section de sortie (18a) pour la délivrance des données d'image stockées dans le tampon d'affichage, et
la section d'ajustement ajuste la valeur du compteur, à laquelle la section de traitement met à jour les données d'image stockées dans le tampon d'affichage, sur la base de la valeur du cadenceur de la section de communication sans fil de l'appareil de jeu.

8. L'appareil de jeu selon la revendication 1, dans lequel
la section de traitement exécute un processus de génération de données d'image et de stockage des données d'image dans l'un ou l'autre d'au moins deux tampons d'affichage, et
l'appareil de jeu comprend en outre une section de sortie pour la délivrance à une section d'affichage desdites données d'image stockées dans l'un ou l'autre des au moins deux tampons d'affichage, et
la section d'ajustement ajuste la valeur du compteur, à laquelle les au moins deux tampons d'affichage utilisés par la section de sortie sont permutés entre eux, sur la base de la valeur du cadenceur de la section de communication sans fil de l'appareil de jeu.

9. L'appareil de jeu selon la revendication 1, dans lequel
la section de traitement exécute de façon répétée le traitement d'une seule unité, traitement qui définit une procédure prédéterminée, et
la section d'ajustement ajuste la valeur du compteur, à laquelle la section de traitement exécute le traitement de jeu d'une seule unité, sur la base de la valeur du cadenceur de la section de communication sans fil de l'appareil de jeu.

10. L'appareil de jeu selon la revendication 1, comprenant en outre une section d'entrée actionnée par un joueur, dans lequel
la section de traitement exécute le processus de jeu sur la base d'une information d'actionnement appliqué en entrée de la section d'entrée, et
la section d'ajustement ajuste la valeur du compteur, à laquelle est exécuté le processus de jeu qui est exécuté par la section de traitement sur la base de l'information d'actionnement, sur la base de la valeur du cadenceur de la section de communication sans fil de l'appareil de jeu.

11. L'appareil de jeu selon la revendication 10, dans lequel
la section de communication sans fil détermine un temps, auquel l'information d'actionnement est échangée avec l'au moins un autre appareil de jeu, sur la base de la valeur du cadenceur.

12. L'appareil de jeu selon la revendication 1, dans lequel
la section de communication sans fil comprend un moyen de délivrance d'un signal d'interruption, pour la délivrance du signal d'interruption dans un cycle constant sur la base de la valeur du cadenceur.

13. L'appareil de jeu selon la revendication 12, dans lequel
le moyen de délivrance de signal d'interruption délivre le signal d'interruption dans le cycle prédéterminé sur la base de la valeur du cadenceur, et
la section d'ajustement ajuste la valeur du compteur de telle sorte que la valeur du compteur obtenue lorsque la section de communication sans fil délivre le signal d'interruption se rapproche d'une valeur fixe prédéterminée.

14. L'appareil de jeu selon la revendication 13, dans lequel
la section de communication sans fil comprend un moyen de paramétrage d'intervalle de balise pour le paramétrage à un cycle constant d'un cycle du signal de balise transmis depuis la section de communication sans fil, et
le moyen de délivrance d'un signal d'interruption délivre le signal d'interruption lorsqu'arrive un temps de transmission du signal de balise.

15. L'appareil de jeu selon la revendication 1, dans lequel
la section de traitement exécute de façon répétée le processus de jeu sur la base de données nécessaires au traitement de jeu, qui sont reçues en provenance de ladite autre section de communication sans fil dans un cycle constant, et
il inclut un moyen de paramétrage d'intervalle de balise pour le paramétrage d'un cycle du signal de balise transmis par la section de communication sans fil au cycle constant, et
la section de communication sans fil transmet le signal de balise dans un cycle constant sur la base de la valeur du cadenceur, et transmet ou reçoit les données nécessaires au traitement de jeu vers, ou en provenance de, ladite autre section de communication sans fil chaque fois que la section de communication sans fil transmet le signal de balise à ladite autre section de communication sans fil, et
la section d'ajustement ajuste la valeur du compteur, à laquelle la section de traitement exécute le processus de jeu, sur la base d'un temps de transmission du signal de balise qui est obtenu sur la base de la valeur du cadenceur de la section de communication sans fil de l'appareil de jeu.

16. L'appareil de jeu selon la revendication 15, comprenant en outre une section d'entrée actionnée par un joueur, dans lequel
la section de traitement exécute de façon répétée le processus de jeu sur la base d'une information d'actionnement appliqué en entrée d'une section d'entrée de l'appareil de jeu et de l'information d'actionnement appliqué en entrée d'une autre section d'entrée de l'au moins un autre appareil de jeu, et
la section de communication sans fil échange l'information d'actionnement avec l'au moins un autre appareil de jeu chaque fois que la section de communication sans fil transmet le signal de balise à ladite autre section de communication sans fil.

17. L'appareil de jeu selon la revendication 15, dans lequel
la section de communication sans fil comprend en outre un moyen de délivrance d'un signal d'interruption pour la délivrance du signal d'interruption sur la base de la valeur du cadenceur, lorsqu'arrive le temps de transmettre le signal de balise, et
la section d'ajustement ajuste ou détermine la valeur du compteur, à laquelle le processus de jeu est exécuté, sur la base d'un temps auquel la section de communication sans fil délivre le signal d'interruption.

18. L'appareil de jeu selon la revendication 17, dans lequel
la section de communication sans fil transmet ou reçoit les données nécessaires au traitement de jeu vers, ou en provenance de, ladite autre section de communication sans fil après transmission du signal de balise à ladite autre section de communication sans fil, et comprend en outre une fonction de mise en sommeil pour opérer dans un mode de sommeil jusqu'à ce qu'arrive le temps de transmission du signal de balise ultérieurement après transmission ou réception des données nécessaires au traitement de jeu vers, ou en provenance de, ladite autre section de communication sans fil.

19. L'appareil de jeu selon la revendication 1, dans lequel
la section de traitement lit la valeur du cadenceur de la section de communication sans fil dans un cycle constant et ajuste la valeur du compteur à laquelle la section de traitement exécute le processus de jeu sur la base de la valeur lue.

20. L'appareil de jeu selon la revendication 19, dans lequel
la section de traitement exécute de façon répétée un traitement de jeu d'une seule unité, traitement qui définit une procédure prédéterminée, et lit la valeur du cadenceur de la section de communication sans fil dans un cycle N fois long (N étant un entier naturel supérieur à 1) comme le traitement de jeu d'une seule unité.

21. L'appareil de jeu selon la revendication 1, dans lequel
la section de communication sans fil synchronise le cadenceur situé à l'intérieur de la section de communication sans fil sur ledit autre cadenceur situé à l'intérieur de ladite autre section de communication sans fil de l'au moins un autre appareil de jeu, sur la base d'une norme IEEE 802.11.

22. Un système de jeu qui assure une partie de jeu multijoueur à l'aide d'une pluralité d'appareils de jeu comprenant au moins un premier appareil de jeu (10a) et un second appareil de jeu (10b), tous capables d'opérer une communication sans fil entre eux en tant que partenaires en communication pour la partie de jeu multijoueur,
le premier appareil de jeu (10a) comprenant :
une première section de communication sans fil (12a), faisant fonction d'un maître, à l'intérieur du premier appareil de jeu (10a) ou qui lui est connectée via un connecteur, et possédant une fonction de synchronisation temporelle pour la transmission d'un signal de balise dans un cycle constant, pour synchroniser un cadenceur (124a) situé à l'intérieur de la première section de communication sans fil (12a), vers un autre cadenceur (124b) situé à l'intérieur d'une seconde section de communication sans fil (12b), faisant fonction d'un client, du second appareil de jeu (10b),
dans lequel le signal de balise est reçu par la section de communication sans fil du second appareil de jeu et comprend une information indiquant un temps de transmission du signal de balise et un intervalle de balise ;
un premier compteur (181a) pour la mesure d'un cycle de traitement d'un processus de jeu exécuté d'une manière cyclique ;
une première section de traitement (14a, 18a) pour l'exécution du processus de jeu d'une manière cyclique sur la base de la valeur du premier compteur ; et
une première section d'ajustement pour l'ajustement de la valeur du premier compteur du premier appareil de jeu sur la base d'un temps auquel la section de communication sans fil délivre un signal d'interruption à la section d'ajustement, de telle sorte que le cycle de traitement du processus de jeu soit synchronisé avec le cycle de transmission du signal de balise transmis depuis la section de communication sans fil,
dans lequel le signal d'interruption est délivré dans un cycle N fois long comme le cycle de transmission du signal de balise, N étant un entier naturel supérieur à 1 ; et
le second appareil de jeu (10b) comprenant :
la seconde section de communication sans fil à l'intérieur du second appareil de jeu (10b) ou qui lui est connectée via un connecteur et possédant la fonction de synchronisation temporelle pour la synchronisation dudit autre cadenceur situé à l'intérieur de la seconde section de communication sans fil sur le cadenceur situé à l'intérieur de la première section de communication sans fil du premier appareil de jeu ;
un second compteur (181b) pour la mesure d'un cycle de traitement d'un processus de jeu d'une manière cyclique ; une seconde section de traitement (14b, 18b) pour l'exécution du processus de jeu d'une manière cyclique sur la base de la valeur du second compteur ; et
une seconde section d'ajustement pour l'ajustement de la valeur du second compteur du second appareil de jeu sur la base d'un temps auquel la section de section de communication sans fil opère la communication, de telle sorte que l'exécution du processus de jeu soit synchronisée avec le cycle de transmission du signal de balise transmis en provenance de la section de communication sans fil.

23. Un procédé de jeu pour assurer une partie de jeu multijoueur à l'aide d'un appareil de jeu (10a) et d'au moins un autre appareil de jeu (10b) capables d'opérer une communication sans fil l'un avec l'autre, le procédé comprenant les étapes suivantes :
la synchronisation d'un cadenceur (124a) situé à l'intérieur d'une section de communication sans fil (12a), faisant fonction d'un maître, de l'appareil de jeu, par transmission d'un signal de balise dans un cycle constant vers un autre cadenceur (124b) situé à l'intérieur d'une autre section de communication sans fil (12b), faisant fonction d'un client, de l'au moins un autre appareil de jeu (10b) qui est déterminé comme étant un partenaire en communication pour la partie de jeu multijoueur, la section de communication sans fil étant située à l'intérieur de l'appareil de jeu ou connectée à l'appareil de jeu via un connecteur,
dans lequel le signal de balise est reçu par la section de communication sans fil de l'au moins un autre appareil de jeu et comprend une information indiquant un temps de transmission du signal de balise et un intervalle de balise ;
la mesure d'un cycle de traitement d'un processus de jeu exécuté d'une manière cyclique, à l'aide d'un compteur (181a) ;
l'exécution, dans une section de traitement (14a, 18a), du processus de jeu d'une manière cyclique sur la base de la valeur du compteur ; et
l'ajustement de la valeur du compteur sur la base d'un temps auquel la section de communication sans fil délivre un signal d'interruption à la section d'ajustement, de telle sorte que le cycle de traitement du processus de jeu soit synchronisé avec le cycle de transmission du signal de balise transmis depuis la section de communication sans fil,
dans lequel le signal d'interruption est délivré dans un cycle N fois long comme le cycle de transmission du signal de balise, N étant un entier naturel supérieur à 1.
